# EUROPÄISCHE PATENTSCHRIFT

(11) **EP 3 279 833 B1**
(45) Veröffentlichungstag und Bekanntmachung des Hinweises auf die Patenterteilung: **08.09.2021**
(21) Anmeldenummer: 17184022.6
(22) Anmeldetag: 31.07.2017
(51) Int. Cl.: G06K 9/00

(54) **VORRICHTUNG UND VERFAHREN ZUR DIREKTAUFNAHME VON ABDRÜCKEN ABGEROLLTER FINGER**
DEVICE AND METHOD FOR DIRECTLY RECORDING FINGERPRINTS FROM ROLLED FINGERS
DISPOSITIF ET PROCÉDÉ D'ENREGISTREMENT DIRECTE DES EMPREINTES DIGITALES DÉROULÉES

(30) Priorität: 01.08.2016 DE 102016114188
(43) Veröffentlichungstag der Anmeldung: 07.02.2018
(73) Patentinhaber: Jenetric GmbH, 07745 Jena (DE)
(72) Erfinder: KRENZER, Daniel, 99848 Wutha-Farnroda (DE); FOX, Michael, 07407 Remda-Teichel (DE); REINHOLD, Jörg, 07743 Jena (DE); MORGENEIER, Dirk, 07749 Jena (DE)
(74) Vertreter: Freitag, Joachim

(56) Entgegenhaltungen:
- EP-A1- 2 400 432
- DE-A1-102013 106 105
- US-A- 4 933 976
- US-A- 5 325 442
- US-A1- 2006 039 050
- US-A1- 2008 063 244
- US-A1- 2012 321 149
- US-B1- 6 483 932
- US-B2- 7 095 880
- US-B2- 7 613 334
- US-B2- 9 202 100

## Beschreibung

Die Erfindung betrifft eine Vorrichtung und ein Verfahren zur Direktaufnahme von Abdrücken eines abgerollten Fingers mit einem Schichtkörper, enthaltend eine Sensorschicht, die eine zweidimensionale Matrix aus Sensorelementen zur Detektion charakteristischer Hautabdrücke des abgerollten Fingers aufweist, und eine Auflagefläche als der Sensorschicht parallel gegenüberliegende Außenfläche des Schichtkörpers, auf der der Finger abrollbar ist.

Die Erfindung findet insbesondere Anwendung bei der elektronischen Aufnahme von gerollten Fingerabdrücken für die erkennungsdienstliche Erfassung und forensische Identitätsermittlung von Personen, wobei die elektronisch aufgenommenen Fingerabdrücke vorzugsweise Eingang in Datenbanken biometrischer Merkmale für forensische Zwecke erhalten und zur Personenidentifikation auf Basis des Vergleichs biometrischer Merkmale eingesetzt werden.

In der US 4 553 837 A wurde erstmalig ein Konzept zur Aufnahme gerollter Fingerabdrücke beschrieben. Hierbei bewegt sich eine Vorrichtung zur Bildaufnahme um den Finger herum. Dieses Konzept wurde optimiert (US 4 783 167 A) und dazu wurden Alternativen mit ebenfalls bewegten Einheiten zur Bildaufnahme in den Patenten US 4 787 742 A und US 4 946 276 A offenbart.

Die genannten Konzepte haben gegenüber dem mechanischen Abrollen eines Fingers auf Papier den Vorteil, dass der Finger beim Abrollvorgang nicht bewegt werden muss. Bei jeglicher Art von Abrollbewegung ist eine hohe qualitative Bildaufnahme schwierig und fehleranfällig. Durch zu viel oder zu wenig Druck, Verrutschen, falsche oder sich ändernde Abrollgeschwindigkeit oder Richtungsänderungen beim Abrollen können Teile der Bildinformation verfälscht und unbrauchbar werden oder verloren gehen. Andererseits sind Anordnungen mit bewegten Komponenten, wie oben angegeben, wartungsintensiv und gerätseitig störanfällig.

Ferner wurden Konzepte vorgestellt, bei denen der Finger auf einer dafür vorgesehenen Auflagefläche abgerollt wird. Hierbei werden durch diese Auflagefläche hindurch fortwährend Bilder aufgenommen und geeignet zusammengesetzt (US 4 933 976 A). Die Algorithmen zur Bildzusammensetzung und auch die Vorrichtungen zur Bildaufnahme wurden stetig verbessert (US 6 597 802 B1, US 6 795 570 B1, US 7 095 880 B2, US 7 613 334 B2). So wurde beispielsweise in der US 5 748 766 A eine Methode entwickelt, um das Verschmieren als Auswirkung des Verrutschens beim Abrollen zu reduzieren.

Es gibt eine Vielzahl von Forderungen hinsichtlich der Qualität, der Auflösung und der Originaltreue der aufgenommenen Bilder von den Hauttexturen. Nicht zuletzt aufgrund hoher Anforderungen durch erkennungsdienstlich arbeitende Organisationen, wie beispielsweise das Federal Bureau of Investigation (FBI), gibt es bei den Erfassungssystemen ein hohes Maß der Standardisierung, um einerseits eine möglichst zweifelsfreie Erkennung zu sichern und andererseits Datensätze, die mit verschiedenen Systemen aufgenommen wurden, vergleichbar zu machen. Beispielsweise müssen solche Systeme eine Auflösung von mindestens 500 ppi haben, was einem Mittenabstand der Sensorelemente von 50,8 µm entspricht. Außerdem werden bestimmte Anforderungen an die Kontrasttransferfunktion (Contrast Transfer Function, CTF), das Signal-Rausch-Verhältnis (Signal Noise Ratio, SNR) und an die Verzeichnung gestellt. Schließlich muss die Grauwertskala mindestens 200 Werte umfassen und das Bildfeld muss sowohl in der näheren Umgebung eines Bildpunktes als auch im gesamten Bild möglichst homogen ausgeleuchtet sein.

Für die Erfassung abgerollter Fingerabdrücke, welche die genannten hohen Qualitätsanforderungen erfüllen, werden derzeit überwiegend optische Anordnungen verwendet, die nach dem Prinzip der ,gestörten Totalreflexion' (Frustrated Total Internal Reflexion - FTIR - häufig auch nur TIR genannt) arbeiten. Die Nutzerführung bei den auf dem Markt befindlichen Geräten erfolgt über Informationen, die außerhalb der Auflagefläche präsentiert werden, wie z. B. durch einen nebengelagerten Bildschirm. Dadurch muss bei der Aufnahme der abgerollten Fingerabdrücke die Person den Blick immer wieder zwischen der Auflagefläche und dem Bildschirm wechseln.

Geräte, die mit TIR arbeiten, sind seit Jahrzehnten bekannt. Deren optische Komponenten und deren Abbildungsstrahlengang wurden fortwährend miniaturisiert, wie z. B. aus US 7 379 570 B2 bekannt.

Ein Konzept zur Darstellung von Informationen über das Abtastergebnis oder die Beeinflussung des Nutzers zur Verbesserung der Abtastung ist beim TIR-Konzept in Verbindung mit konventioneller optischer Abbildung nicht bekannt und technisch schwer umsetzbar, da die Anzeigekomponenten den optischen Strahlengang nicht stören dürfen.

Mit alternativen optischen Konzepten ohne konventionelle Abbildung, also ohne optische Spiegel und/oder Linsen, wurde weiterführend versucht, den Vorteil der hohen Bildgu te des TIR-Konzepts mit geringer Baugröße zu verbinden. In der US 2012/0321149 A1 sind Ansätze dazu beschrieben. Ein weiteres optisches Konzept einer flachen Bauweise ohne abbildende Optik wird in der US 7 366 331 B2 beschrieben.

Neben den optischen Sensoren sind auch kapazitive Sensoren bekannt. Die Aufnahme kann hier mit verschiedenen Konzepten umgesetzt werden, wie z. B. offenbart in US 5 325 442 A, DE 197 56 560 A1, US 6 437 583 B1, US 6 016 355 A und US 5 956 415 A. Allen gemein ist, dass über eine Referenzmessung an einem definierten Kondensator die Kapazität der Haut gemessen, elektronisch ausgelesen und über einen AD-Wandler in ein digitales Bild gewandelt wird. Echtzeit-Darstellungen des Ergebnisses mit Korrekturanweisungen an den Nutzer sind dabei schwerlich realisierbar.

Des Weiteren existieren auch Konzepte zur akustischen (z. B. US 8 601 876 B2) und piezoelektrischen (z. B. US 4 394 773 A) Aufnahme von Fingerabdrücken, die sich aufgrund ihrer Auflösungs- und Qualitätsmerkmale jedoch nicht mit der Aufnahme von gerollten Fingerabdrücken beschäftigt haben.

Alle genannten optischen Konzepte ohne konventionelle Abbildung und auch die nicht-optischen Konzepte ermöglichen Schichtaufbauten geringer Baugröße. Sie eignen sich sowohl zur Detektion flacher als auch abgerollter Fingerabdrücke. Bisher ermöglicht allerdings keines dieser offenbarten Konzepte die Darstellung von Nutzeranweisungen zur Aufnahme eines abgerollten Fingerabdrucks mit Qualitätskontrolle und Korrekturanweisung direkt auf der Auflagefläche.

Trotz inzwischen weit verbesserter Softwarealgorithmen zur Optimierung der einzelnen Aufnahmen und zur geeigneten Zusammensetzung der Einzelbilder ist der Abrollvorgang noch immer fehleranfällig und das Ergebnis der zusammengesetzten Abrollbilder entspricht oft nicht der gewünschten Qualität.

Neben hinreichend guter Hardware zur Bildaufnahme und Software zur Berechnung und Optimierung des Rollbildes ist es enorm wichtig, dass der Abrollvorgang gut abläuft. Das heißt, dass Anfangs- und Endpositionierung des Fingers korrekt sind sowie die Rollgeschwindigkeit, der Druck, mit dem der Finger auf die Auflagefläche gedrückt wird, und die Rollrichtung möglichst konstant und an das Bildaufnahmesystem angepasst sind. Die Optimierung des Abrollvorganges kann beispielsweise durch speziell geschultes Personal erfolgen, das ist jedoch zeitlich und finanziell sehr aufwändig und nicht immer und überall möglich. Deshalb wäre es wünschenswert, wenn das Gerät selbst mit dem Nutzer so kommuniziert bzw. interagiert, dass dieser während des Abrollprozesses geführt bzw. angeleitet wird, sodass ein optimales Abrollbild des Fingers entsteht. Auch bei der Anwendung des Gerätes durch geschultes Personal würde ein geführter Abrollprozess eine Erleichterung bzw. Unterstützung für das Personal darstellen, z. B. für Personal, das nur unregelmäßig gerollte Fingerabdruckaufnahmen anfertigt und mangels Routine dabei ggf. jedes Mal eine Anleitung heranziehen würde, um Bedienfehler zu vermeiden.

In der US 9 202 100 B2 wird ein Konzept zur Nutzerführung beschrieben, bei der der Anwender über ein separates Display in der Nähe der Auflagefläche Informationen zur Anzahl und Lage, zum Ruhighalten und zum richtigen Anpressdruck der Finger gezeigt bekommt. Dies hat vor allem den Zweck, den Nutzer auf Fehler bei der Auflage von Einzel- und Vierfingerabdrücken hinzuweisen. Das Konzept ist dadurch gekennzeichnet, dass neben der Aufnahmeeinheit eine zweidimensionale Anzeigeeinheit angeordnet ist. Es beschreibt dabei die Aufnahme von flachen, also nicht abgerollten Fingerabdrücken. Gegenstand der gezeigten Nutzerführung ist die Anzeige einer Bildsequenz, bei der für den Nutzer eine Ansicht der Rückseite seiner aufgelegten Extremität (Finger bzw. Hand) simuliert dargestellt wird. Hier wird mittels der symbolischen Finger- oder Handabbildung ein Übergang von einem vorliegenden Fehlerzustand zu einem gewünschten Endzustand gezeigt. Dabei werden keine Schriftzeichen verwendet und es wird kein Abdruck-Ergebnisbild angezeigt. Nachteilig ist, dass bei der aufgeforderten Nutzeraktion diese nicht im Prozess kontrolliert und beeinflusst werden kann. Insbesondere bei der Aufnahme abgerollter Finger wäre dies aber sinnvoll oder gar notwendig.

Der Erfindung liegt die Aufgabe zugrunde, eine neue Möglichkeit zur Aufnahme abgerollter Fingerabdrücke zu finden, die ein optimales Fingerabrollen durch den Nutzer selbst und ohne geschultes Personal mit einer größtmöglichen Einflussnahme auf die oben genannten kritischen Parameter des Abrollens während des Abrollvorgangs gestattet.

Die Aufgabe wird bei einer Vorrichtung zur Direktaufnahme von Abdrücken eines abgerollten Fingers mit einem Schichtkörper, enthaltend eine Sensorschicht, die eine zweidimensionale Matrix aus Sensorelementen zur Detektion charakteristischer Hautabdrücke des abgerollten Fingers aufweist, und eine Auflagefläche als der Sensorschicht parallel gegenüberliegende Außenfläche des Schichtkörpers, auf der der Finger abgerollt wird, erfindungsgemäß dadurch gelöst, dass der Abstand zwischen der Sensorschicht und der Auflagefläche kleiner ist als das Fünffache des Mittenabstandes zweier benachbarter Sensorelemente, dass eine Lichtquelle vorhanden ist, die einzeln oder in Gruppen ansteuerbare Leuchtelemente aufweist, mit denen Lichtanteile der Lichtquelle durch die Auflagefläche hindurch visuell sichtbare Muster zur Nutzerinformation mit räumlichem und zeitlichem Bezug zum abrollenden Finger erzeugbar sind, und dass eine elektronische Steuerung vorhanden ist, die mit der Lichtquelle in Verbindung steht und so steuerbar ist, dass durch die Lichtquelle in unterschiedlichen Bereichen der Auflagefläche ein zeitlich veränderliches Muster erzeugbar ist.

Zweckmäßig kann eine Sensorschicht eingesetzt werden, deren Sensorelemente empfindlich gegenüber mindestens einer physikalischen Größe aus der Gruppe: Kapazität, ohmscher Widerstand, Impedanz, akustische Signale, Temperatur und Lichtintensität sind.

Vorteilhaft sind die Leuchtelemente der Lichtquelle so ansteuerbar, dass dargestellte Muster mit einer Bildwiederholfrequenz von mindestens einem Bild pro Sekunde änderbar sind.

Vorzugsweise ist der Abstand zwischen der Sensorschicht und der Auflagefläche kleiner als das Zweifache des Mittenabstandes zweier benachbarter Sensorelemente.

Es erweist sich als zweckmäßig, wenn die Sensorschicht derart ausgebildet ist, dass eine Aufnahmegeschwindigkeit, mit der Aufnahmen des abgerollten Fingers ausgelesen werden, für einen Teilbereich der Auflagefläche höher einstellbar ist als für Aufnahmen über die gesamte Fläche.

In einer vorteilhaften Ausführung der Erfindung sind die Sensorelemente lichtempfindlich und die Lichtquelle des Schichtkörpers ist so ausgebildet, dass zusätzlich zur Darstellung von Mustern zur Nutzerinformation mittels einzeln oder in Gruppen ansteuerbarer Bereiche der Lichtquelle ein Beleuchtungsmuster zur homogenisierten Ausleuchtung des abrollenden Fingers und zur Minimierung des Einflusses von Umgebungslicht bei der Aufnahme abgerollter Fingerabdrücke erzeugt werden kann.

Dabei ist die Lichtquelle vorzugsweise so ausgebildet, dass der abrollende Finger zur Bildaufnahme mit Licht eines gewünschten Wellenlängenbereichs beleuchtet wird.

In einer weiteren bevorzugten Ausführung der Erfindung, in der die Sensorelemente lichtempfindlich sind, ist zusätzlich zu der Lichtquelle für die Darstellung von Mustern zur Nutzerinformation eine weitere Lichtquelle zur Beleuchtung des abrollenden Fingers mit Licht eines gewünschten Wellenlängenbereichs vorhanden und so ausgebildet, dass mittels einzeln oder in Gruppen ansteuerbarer Bereiche der weiteren Lichtquelle ein Beleuchtungsmuster zur homogenisierten Ausleuchtung des abrollenden Fingers und zur Minimierung des Einflusses von Umgebungslicht bei der Aufnahme abgerollter Fingerabdrücke erzeugt werden können.

Für jede der vorgenannten Ausführungen der Lichtquellen können diese alternative als Flüssigkristall-, Leuchtdioden-, Elektrolumineszenz- oder Quantenpunktdisplay ausgebildet sein.

Es erweist sich als vorteilhaft, dass die elektronische Steuerung mit der Sensorschicht verbunden ist und eine Recheneinheit zur Berechnung eines angepassten inhomogenen Beleuchtungsmusters zur Beleuchtung des abrollenden Fingers aufweist sowie zur Ansteuerung von einzeln oder in Gruppen ansteuerbaren Bereichen mit der einen oder weiteren Lichtquelle in Verbindung steht zur Beleuchtung des abrollenden Fingers mit dem angepassten inhomogenen Beleuchtungsmuster.

Des Weiteren wird die Aufgabe mit einem Verfahren zur Direktaufnahme von Abdrücken eines abgerollten Fingers erfindungsgemäß gelöst unter Verwendung einer Vorrichtung mit einem Schichtkörper, enthaltend eine Sensorschicht zur Detektion charakteristischer Hautabdrücke des abgerollten Fingers, eine Auflagefläche als der Sensorschicht parallel gegenüberliegende Außenfläche des Schichtkörpers, auf der der Finger abgerollt werden kann, und eine Lichtquelle, die einzeln oder in Gruppen ansteuerbare Leuchtelemente aufweist, sodass Lichtanteile der Lichtquelle durch die Auflagefläche hindurch visuell sichtbare Muster zur Nutzerinformation mit räumlichem und zeitlichem Bezug zum abrollenden Finger erzeugen können, durch folgende Schritte:
- Positionieren des Fingers eines Nutzers auf der Auflagefläche,
- Anzeigen einer Handlungsanweisung als visuell sichtbare Muster zur Nutzerinformation in mindestens einem Bereich der Auflagefläche mittels Ansteuerung der einzeln oder in Gruppen ansteuerbaren Leuchtelemente der Lichtquelle, sodass der Nutzer zum Ausführen einer Abrollbewegung des auf der Auflagefläche positionierten Fingers angeregt wird,
- Ausführen einer Abrollbewegung des Fingers des Nutzers auf der Auflagefläche entsprechend einer sich mit räumlichem und zeitlichem Bezug zum abrollenden Finger ändernden Handlungsanweisung,
- Auslesen von Sensordaten spätestens ab Beginn und bis zu einem Ende der Abrollbewegung und Speichern von sukzessive aus der Sensorschicht ausgelesenen Sensordaten als an der Auflagefläche örtlich fortschreitend erfasste Fingerabdruckaufnahmen.

Vorteilhaft geht dem Positionieren des Fingers durch Ansteuerung der einzeln oder in Gruppen ansteuerbaren Leuchtelemente der Lichtquelle ein Anzeigen eines Musters zur Nutzerinformation als Handlungsanweisung zur korrekten Positionierung und Orientierung des Fingers auf der Auflagefläche voraus.

Vorzugsweise wird das Ergebnis der Abrollbewegung des Fingers als Muster zur Nutzerinformation auf der Auflagefläche angezeigt.

Dabei kann das Ergebnis der Abrollbewegung als aktuelle Sensoraufnahme abgebildet, als zusammengesetzter Fingerabdruck oder als abstrahierter Fingerabdruck dargestellt werden.

Des Weiteren ist es vorteilhaft, während des Abrollvorganges eine gewünschte Geschwindigkeit der Abrollbewegung des Fingers durch eine Bildsequenz als Muster zur Nutzerinformation direkt auf der Auflagefläche vorzugeben.

In einer bevorzugten Variante wird eine vom Nutzer gewählte Abrollrichtung erkannt und durch angepasste Darstellung einer Animation der Abrollbewegung unterstützt.

Es erweist sich als zweckmäßig, wenn eine gezielte Bildverarbeitung zur Erzeugung des charakteristischen Abdruckbildes des abgerollten Fingers aus den sukzessive durch die Sensorschicht erzeugten Aufnahmen erfolgt, wobei mindestens eine der folgenden Routinen zum Einsatz kommt:
- Verwendung redundanter Fingerabdruckinformationen aus überlappenden Bildbereichen der sukzessive erzeugten Aufnahmen zum Reduzieren von Rauschen,
- Auswählen der am wenigsten unscharfen oder anderweitig gestörten Fingerabdruckinformationen aus den sukzessive erzeugten Aufnahmen zur Weiterverarbeitung,
- Übereinanderlegen und passendes Transformieren von Bereichen mit Fingerabdruckinformationen aus den sukzessive erzeugten Aufnahmen anhand von aufgefundenen Übereinstimmungsmerkmalen,
- Anfügen ausschließlich neuer Bereiche von Fingerabdruckinformationen während des Abrollvorganges nach erstmalig erzeugter Aufnahme über alle sukzessive erzeugten Aufnahmen,
- Anfügen neuer Bereiche von Fingerabdruckinformationen während des Abrollvorganges nach erstmalig erzeugter Aufnahme über alle sukzessive erzeugten

Aufnahmen und Ersetzen bereits vorhandener Bereiche durch neue Fingerabdruckinformationen der sukzessive erzeugten Aufnahmen, falls letztere qualitativ bessere Aufnahmen des gleichen Bereichs der Fingerabdruckinformationen enthalten.

Als eine vorzuziehende Variante der Erfindung werden die während des Abrollvorgangs von der Sensorschicht sukzessive erzeugten Aufnahmen auf Abrollfehler analysiert und beim Erkennen von Fehlern oder nicht erfüllten Qualitätskriterien visuell sichtbare Muster zur Nutzerinformation als Handlungsanweisungen an den Nutzer direkt auf der Auflagefläche angezeigt.

In einer besonders bevorzugten Variante des Verfahrens, bei der eine optische Aufnahme durch eine lichtempfindliche Sensorschicht erfolgt, wird eine Lichtquelle zur Beleuchtung des abrollenden Fingers einzeln oder in Gruppen so angesteuert, dass der abrollende Finger mit einem angepassten inhomogenen Beleuchtungsmuster zur Minimierung des Einflusses von Umgebungslicht und zur Erzeugung einer homogenisierten Ausleuchtung des abrollenden Fingers beleuchtet wird.

Die Erfindung basiert auf der Grundüberlegung, dass herkömmliche Geräte zur Aufnahme von abgerollten Fingerabdrücken entweder durch mechanisch bewegte Teile anfällig und teuer sind oder nicht und/oder nicht ausreichend durch interaktive Nutzerführung unterstützt sind. Das liegt einerseits daran, dass durch ungünstiges Nutzerverhalten die technischen Möglichkeiten der Bildaufnahmeeinrichtung nicht optimal genutzt werden können. Andererseits haben bekannte Geräte nicht die technischen Möglichkeiten, eine differenzierte und damit passgenaue interaktive Nutzerführung zu ermöglichen.

Beim erfindungsgemäßen Konzept wird der Rollvorgang für den Nutzer interaktiv optimal geführt, indem im Bereich der Auflagefläche des Fingers nicht nur der Sensor zur Detektion, sondern zugleich ein Anzeigesystem zur Kommunikation mit dem Nutzer vorhanden ist. Mit dem unterlegten bzw. eingebetteten Anzeigesystem kann auf der Auflagefläche beispielsweise die Rollgeschwindigkeit vorgegeben werden, indem beispielsweise eine beleuchtete Linie vom Startpunkt zum Endpunkt bewegt wird.

Ein weiterer Vorteil dieser neuartigen Sensor-Anzeige-Technologie ist, dass die aktive Anzeigeeinheit bei Systemen mit optischem Sensor neben der Nutzerführung gleichzeitig als zeitlich und räumlich veränderliche Beleuchtung für den Finger zur Bildaufnahme des abgerollten Fingerabdrucks dienen kann. In diesem Fall ist nicht nur die homogene Beleuchtung der gesamten Auflagefläche möglich, sondern eine räumlich und zeitlich veränderliche Beleuchtung. So kann beispielsweise die genannte Linie zur Vorgabe der Rollgeschwindigkeit auch zusätzlich als ein Helligkeitsprofil zur optimierten Beleuchtung für die Erzeugung von Bildern mit erhöhtem Dynamikumfang (High Dynamic Range - HDR) verwendet werden. Durch das Abrollen können dabei von derselben Ortskoordinate des Fingers verschiedene Helligkeitsinformationen erhalten werden.

Außerdem kann das Ergebnis des Abrollens direkt auf den während des Abrollprozesses beim Abrollen freiwerdenden Stellen der Auflagefläche angezeigt werden. So kann für den Betrachter/Nutzer das Abrollen dem auf einem Blatt Papier nachempfunden und so die Akzeptanz gegenüber der Technologie erhöht werden. Das Ergebnis des Abrollens kann zusätzlich oder alternativ an der Auflagefläche, unmittelbar in der Nähe der angezeigten Rollfläche, dargestellt werden. So kann das Abrollen beobachtet und überprüft werden. Dabei kann das dargestellte Ergebnis symbolisch sein, um lediglich den Prozess zu kommunizieren, oder das spezifische Abdruckbild darstellen.

Bei der erfindungsgemäßen Anordnung sind die Aufnahmeeinheit und die Anzeigeeinheit als eine Gesamteinheit zusammengefasst, indem eine Lichtquelle direkt unterhalb der Aufnahmeeinheit platziert wird, sodass der Nutzer diese nicht als separate Einheit wahrnehmen kann.

Nachfolgend soll die Erfindung anhand von Ausführungsbeispielen und beigefügten Zeichnungen näher erläutert werden. Die Zeichnungen zeigen:

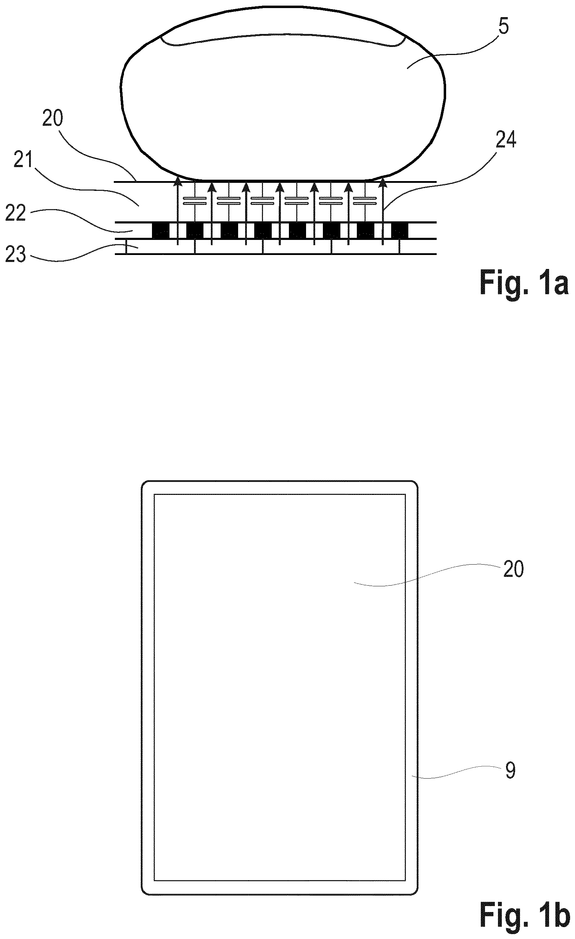

- Fig. 1a: einen Querschnitt eines Aufnahmegerätes mit kapazitivem Sensor als bevorzugte Ausführungsform,
- Fig. 1: b eine Draufsicht eines Aufnahmegerätes als bevorzugte Ausführungsform,
- Fig. 2a: einen Querschnitt eines Aufnahmegerätes mit optischem Sensor als bevorzugte Ausführungsform,
- Fig. 2b: einen Querschnitt eines Aufnahmegerätes mit optischem Sensor und zusätzlicher weitere Lichtquelle (zur Beleuchtung als bevorzugte Ausführungsform,
- Fig. 3: einen Querschnitt eines Aufnahmegerätes mit akustischem Sensor als bevorzugte Ausführungsform,
- Fig. 4a: eine bevorzugte Ausführungsform zur Abrollprozedur ,von Nagel zu Nagel' (Nail-to-Nail), wobei das Display den Bereitschaftszustand darstellt,
- Fig. 4b: eine bevorzugte Ausführungsform zur Abrollprozedur ,von Nagel zu Nagel' (Nail-to-Nail), wobei das Display zur Fingerpositionierung auffordert,
- Fig. 5a: eine bevorzugte Ausführungsform zur Abrollprozedur ,von Nagel zu Nagel' (Nail-to-Nail), wobei das Display die erste Phase des Abrollvorganges interaktiv darstellt,
- Fig. 5b: eine bevorzugte Ausführungsform zur Abrollprozedur ,von Nagel zu Nagel' (Nail-to-Nail), wobei das Display die mittlere Phase des Abrollvorganges interaktiv darstellt,
- Fig. 5c: eine bevorzugte Ausführungsform zur Abrollprozedur ,von Nagel zu Nagel' (Nail-to-Nail), wobei das Display die letzte Phase des Abrollvorganges interaktiv darstellt,
- Fig. 6a: eine bevorzugte Ausführungsform zur Abrollprozedur ,von Nagel zu Nagel' (Nail-to-Nail), wobei das Display das Ergebnis darstellt und das Ende der Abrollprozedur signalisiert,
- Fig. 6b: eine weitere bevorzugte Ausführungsform zur Abrollprozedur ,von Nagel zu Nagel' (Nail-to-Nail), wobei das Display das Ergebnis hochauflösend darstellt und das Ende der Abrollprozedur signalisiert,
- Fig. 7: eine weitere bevorzugte Ausführungsform zur Abrollprozedur ,von Nagel zu Nagel' (Nail-to-Nail), wobei das Display den Bereitschaftszustand darstellt,
- Fig. 8a: die Ausführung der Erfindung gemäß Fig. 7 mit einer weiteren Art der Darstellung einer Aufforderung zum Auflegen und Abrollen des Fingers ,von Nagel zu Nagel' (Nail-to-Nail), wobei das Display die erste Phase des Abrollvorganges interaktiv darstellt und im Abrollbereich der abgerollte Abdruck des Fingers wie "Tinte auf Papier" interaktiv dargestellt wird,
- Fig. 8b: die Ausführung der Erfindung gemäß Fig. 7 mit einer weiteren Art der Darstellung einer Aufforderung zum Auflegen und Abrollen des Fingers 'von Nagel zu Nagel' (Nail-to-Nail), wobei das Display die mittlere Phase des Abrollvorganges interaktiv darstellt und im Abrollbereich der abgerollte Abdruck des Fingers wie "Tinte auf Papier" interaktiv dargestellt wird,
- Fig. 8c: die Ausführung der Erfindung gemäß Fig. 7 mit einer weiteren Art der Darstellung einer Aufforderung zum Auflegen und Abrollen des Fingers 'von Nagel zu Nagel' (Nail-to-Nail), wobei das Display die letzte Phase des Abrollvorganges interaktiv darstellt und im Abrollbereich der abgerollte Abdruck des Fingers wie "Tinte auf Papier" interaktiv dargestellt wird,
- Fig. 9a: die Ausführung der Erfindung gemäß Fig. 7 mit einer weiteren Ergebnisdarstellung und Endanzeige der Abrollprozedur,
- Fig. 9b: eine weitere bevorzugte Ausführungsform zur Abrollprozedur ,von Nagel zu Nagel' (Nail-to-Nail), wobei das Display das Ergebnis in hochauflösender Form darstellt und das Ende der Abrollprozedur signalisiert,
- Fig. 10a: ein weiteres Ausführungsbeispiel der Erfindung mit einer nutzergeführten Aufnahme eines abgerollten Fingerabdruckes mittels Links- und Rechtsrollen des Fingers (Rock'n'Roll),
- Fig. 10b: ein weiteres Ausführungsbeispiel der Erfindung mit einer nutzergeführten Aufnahme eines abgerollten Fingerabdruckes mittels Links- und Rechtsrollen des Fingers (Rock'n'Roll),
- Fig. 11a: die Ausführung der Erfindung gemäß Fig. 10a, Fig. 10b mit einer weiteren Art der Darstellung einer Aufforderung zum Auflegen und Abrollen des Fingers,
- Fig. 11b: die Ausführung der Erfindung gemäß Fig. 10a, Fig. 10b mit einer weiteren Art der Darstellung einer Aufforderung zum Auflegen und Abrollen des Fingers,
- Fig. 11c: die Ausführung der Erfindung gemäß Fig. 10a, Fig. 10b mit einer weiteren Art der Darstellung einer Aufforderung zum Auflegen und Abrollen des Fingers,
- Fig. 11d: die Ausführung der Erfindung gemäß Fig. 10a, Fig. 10b mit einer weiteren Art der Darstellung einer Aufforderung zum Auflegen und Abrollen des Fingers,
- Fig. 12a: die Ausführung der Erfindung gemäß Fig. 10a mit einer weiteren Art der Ergebnisdarstellung und Endanzeige der Abrollprozedur,
- Fig. 12b: eine weitere bevorzugte Ausführungsform zur Abrollprozedur ,von Nagel zu Nagel' (Nail-to-Nail), wobei das Display das Ergebnis in hochauflösender Form darstellt und das Ende der Abrollprozedur signalisiert,
- Fig. 13a: für die Ausführung der Erfindung gemäß Fig. 4b verschiedene Fehlervarianten bei Aufnahme eines abgerollten Fingerabdrucks sowie die während der Abrollprozedur dazu möglichen Korrekturaufforderungen bei unzulässiger Randlage des Fingers beim Start,
- Fig. 13b: die Ausführung der Erfindung gemäß Fig. 4b mit einer Fehlervariante für das Verrutschen des Fingers während des Abrollvorganges,
- Fig. 13c: die Ausführung der Erfindung gemäß Fig. 4b mit einer Fehlervariante für das Verlassen des Aufnahmebereichs während des Abrollvorganges,
- Fig. 13d: die Ausführung der Erfindung gemäß Fig. 4b mit einer Fehlervariante für das zu schnelle oder zu langsame Abrollen des Fingers,
- Fig. 13e: die Ausführung der Erfindung gemäß Fig. 4b mit einer Fehlervariante für das Erkennen eines zu trockenen Fingers,
- Fig. 13f: die Ausführung der Erfindung gemäß Fig. 4b mit einer Fehlervariante für das Erkennen eines zu feuchten Fingers,
- Fig. 13g: die Ausführung der Erfindung gemäß Fig. 4b mit einer Fehlervariante für das Erkennen eines beim Abrollvorgang zumindest teilweise abgehobenen Fingers,
- Fig. 13h: ein Beispiel für eine Ergebnisdarstellung bei zu verschmutztem Aufnahmebereich mit der Aufforderung zur Reinigung,
- Fig. 14: ein Beispiel für eine Ergebnisdarstellung bei negativem Ausgang, wobei das Display das unfertige Ergebnis des Abrollvorganges interaktiv darstellt,
- Fig. 15: einen grundlegenden Ablauf eines Verfahrens zur Aufnahme von gerollten Fingerabdrücken mit einer Vorrichtung, die im Sensorbereich eine interaktive Nutzerführung zur Durchführung des Abrollprozesses anzeigt,
- Fig. 16a: einen grundlegenden Ablauf des Verfahrens gemäß Fig. 15, erweitert um eine interaktive Nutzerführung für den Auflagevorgang des Fingers vor dem Start des eigentlichen Abrollprozesses und erweitert um eine Anzeige des Abschlusses des Abrollvorgangs,
- Fig. 16b: eine Nutzerführung vor dem Start des Abrollprozesses,
- Fig. 17: eine erweiterte Ausgestaltung des Verfahrensablaufs gemäß Fig. 16a, bei der Bedienfehler während des Abrollprozesses erkannt und behandelt werden,
- Fig. 18: eine weitere Ausgestaltung des Verfahrensablaufs gemäß Fig. 16a, bei der das Aufnahmeergebnis des Abrollprozesses geprüft wird und bei schlechter Aufnahmequalität bzw. Aufnahmefehlern eine Wiederholung der Aufnahme und somit des Abrollprozesses eingeleitet wird,
- Fig. 19: eine weitere Ausgestaltung des Verfahrensablaufs gemäß Fig. 16a mit Kombination der in Fig. 17 dargestellten Fehlererkennung während des Abrollprozesses und der in Fig. 18 dargestellten Prüfung des Aufnahmeergebnisses des Abrollprozesses mit jeweils entsprechender Einleitung von Gegenmaßnahmen bei erkannten Problemen,
- Fig. 20: eine weitere Ausgestaltung eines der Verfahrensabläufe gemäß Fig. 15 bis Fig. 19 mit optischem Aufnahmeverfahren und zusätzlicher dynamischer Beleuchtung des abrollenden Fingers nach einem festgelegten zeitlichen Ablauf,
- Fig. 21: eine weitere Ausgestaltung eines der Verfahrensabläufe gemäß Fig. 15 bis Fig. 19 mit optischem Aufnahmeverfahren und zusätzlicher dynamischer Beleuchtung des abrollenden Fingers unter Berücksichtigung der aktuellen Position, Form und Ausleuchtung des Fingers auf dem Sensor,
- Fig. 22: ein Ausführungsbeispiel für einen optischen Sensor, bei dem der Bereich, auf dem der Finger abgerollt werden soll, homogen ausgeleuchtet wird,

- Fig. 23a: ein Ausführungsbeispiel für einen optischen Sensor, bei dem stets der Teil des Bereichs, auf dem abgerollt werden soll, homogen ausgeleuchtet ist, auf dem sich der Finger befindet,
- Fig. 23b: ein Ausführungsbeispiel für einen optischen Sensor, bei dem stets der Teil des Bereichs, auf dem abgerollt werden soll, homogen ausgeleuchtet ist, auf dem sich der Finger befindet,
- Fig. 23c: ein Ausführungsbeispiel für einen optischen Sensor, bei dem stets der Teil des Bereichs, auf dem abgerollt werden soll, homogen ausgeleuchtet ist, auf dem sich der Finger befindet,
- Fig. 24a: ein Ausführungsbeispiel für einen optischen Sensor, bei dem zu jedem Zeitpunkt des Abrollvorganges der aufgelegte Fingerbereich durch ein jeweils spezielles Beleuchtungsmuster beleuchtet wird,
- Fig. 24b: ein Ausführungsbeispiel für einen optischen Sensor, bei dem zu jedem Zeitpunkt des Abrollvorganges der aufgelegte Fingerbereich durch ein jeweils spezielles Beleuchtungsmuster beleuchtet wird, und
- Fig. 24c: ein Ausführungsbeispiel für einen optischen Sensor, bei dem zu jedem Zeitpunkt des Abrollvorganges der aufgelegte Fingerbereich durch ein jeweils spezielles Beleuchtungsmuster beleuchtet wird.

### Sensorkonzepte

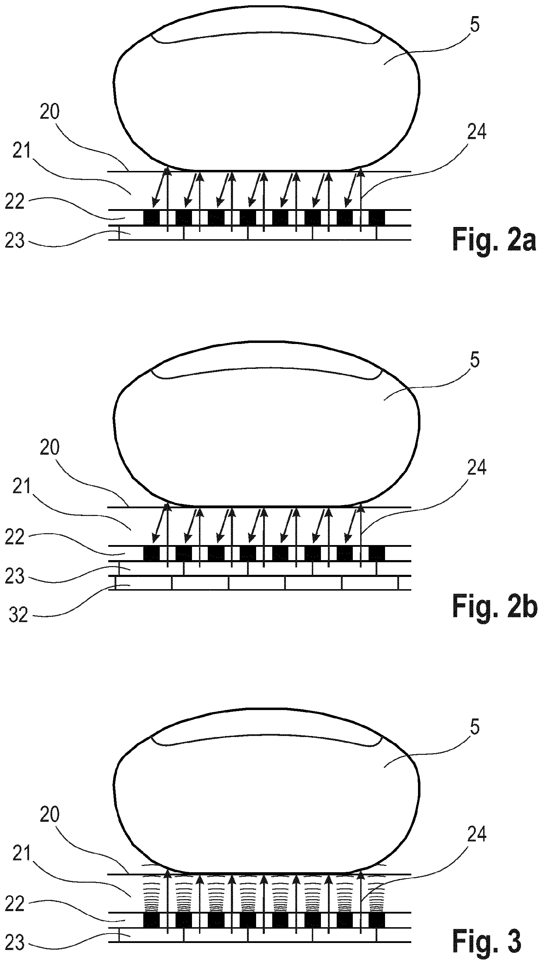

In Fig. 1a, Fig. 2a und Fig. 3 sind jeweils Querschnitte von Aufnahmegeräten als bevorzugte Ausführungsformen zu sehen. Der Finger 5 befindet sich dabei in direktem Kontakt zur Auflagefläche 20. Zwischen der Auflagefläche 20 und der Sensorschicht 22 befindet sich eine Schutzschicht 21, die den Sensor vor Umwelteinflüssen schützt. Die Sensorschicht 22 detektiert Signale, die charakteristische Informationen über die Papillarlinien des aufgelegten Finger 5 enthalten. Diese Sensorschicht 22 kann dabei beispielweise, wie in Fig. 1a gezeigt, aus kapazitiv sensitiven Sensorelementen, wie in Fig. 2a gezeigt, aus optisch sensitiven Sensorelementen oder, wie in Fig. 3 gezeigt, aus akustisch sensitiven Sensorelementen (z. B. Ultraschall-Sensorelementen) bestehen. Unterhalb der Sensorschicht 22 befindet sich die Lichtquelle 23, die Lichtanteile 24 durch das darüber liegende Schichtsystem zu senden vermag, so dass visuelle Informationen vom Anwender direkt auf der Auflagefläche 20 wahrgenommen werden können. Dabei kann die Lichtquelle 23 beispielsweise ein TFT-LC-, LED-, Quantenpunkt- oder Elektrolumineszenz-Bildschirm sein. Bei Aufnahmegeräten mit optischen Sensoren kann diese Lichtquelle 23 sowohl zur Anzeige der Nutzerführung als auch zur Beleuchtung des abzurollenden Fingers 5 verwendet werden. In einer alternativen Ausführungsform kann neben der Lichtquelle 23 zusätzlich auch eine weitere Lichtquelle (zur Beleuchtung 32 des abzurollenden Finger 5 vorhanden sein, wie in Fig. 2b dargestellt. Diese kann beispielsweise ebenso ein Bildschirm, wie beispielsweise ein TFT-LC-, LED-, Quantenpunkt- oder Elektrolumineszenz-Bildschirm, oder auch eine homogene Beleuchtung sein, beispielsweise realisiert durch einen Lichtwellenleiter in Verbindung mit LEDs oder durch eine flächige LED-Beleuchtung.

Die Auflösung des Bildschirms sollte dabei mindestens 10 dpi (Bildpunkte pro Zoll) sein, um hinreichend Informationen darstellen zu können. Die bevorzugte Auflösung sollte zwischen 60 dpi und 400 dpi liegen, um Bildinformationen, wie beispielsweise detaillierte Piktogramme zur Nutzerführung oder Ergebnisbilder 13 der Fingerabdruckaufnahmen, darstellen zu können. Bildschirme mit höheren Auflösungen als 400 dpi bieten dem Nutzer im vorgesehenen Anwendungsszenario keinen Mehrwert. Die Bildwiederholrate des Bildschirms sollte größer als ein Bild pro Sekunde sein, um eine Darstellung sich ändernder Handlungsanweisungen während des Abrollvorgangs zu ermöglichen. Vorzugsweise sollte die Bildwiederholrate zwischen 10 und 30 Bildern pro Sekunde liegen, damit einerseits Bildsequenzen zur Nutzerführung, z. B. eine Handlungsanweisung zum Abrollen, vom Nutzer ohne störende ruckartige Bewegungen wahrgenommen werden können. Andererseits bieten höhere Bildwiederholraten als 30 Bilder pro Sekunde dem Nutzer im vorgesehenen Anwendungsszenario keinen Mehrwert. Fig. 1b zeigt die Draufsicht eines bevorzugten Aufnahmegerätes mit einem Rahmen 9 und der Auflagefläche 20.

### Nutzergeführte Aufnahme abgerollter Fingerabdrücke

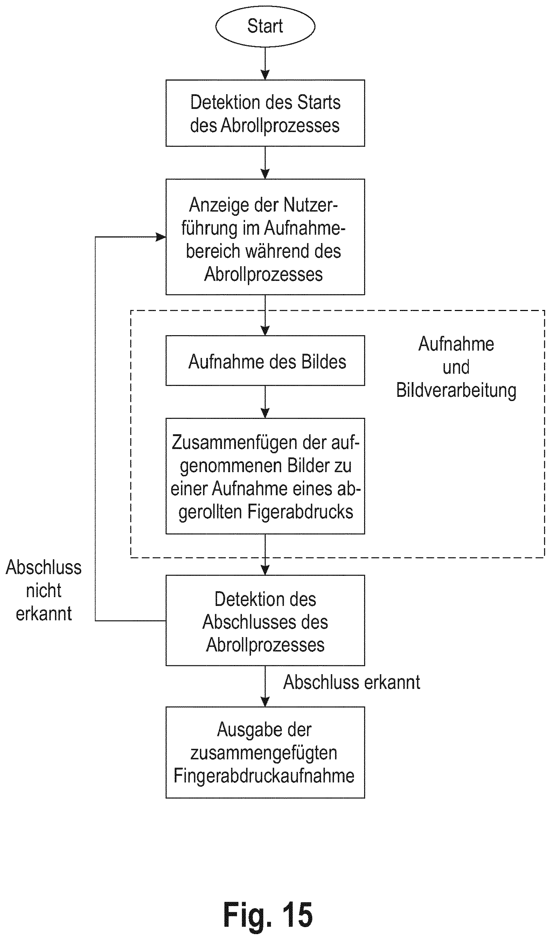

In Fig. 15 ist zunächst der grundlegende Ablauf zur Aufnahme von gerollten Fingerabdrücken 11 mit einer Vorrichtung dargestellt, die im Sensorbereich eine interaktive Nutzerführung zur Durchführung des Abrollprozesses anzeigt.

Nach dem Start der Bildaufnahme und Auswertung wird der Start des eigentlichen Abrollprozesses eines auf den Sensor aufgelegten Fingers 5 detektiert. Innerhalb dieses Prozesses werden fortlaufend durch den Sensor Aufnahmen des Abrollbereiches 3 erstellt und durch automatische Auswertung dieser aufeinanderfolgenden Aufnahmen wird festgestellt, ob der Finger 5 noch still liegt oder schon abgerollt wird. In einer alternativen Ausführungsvariante kann der Start des Abrollprozesses auch manuell signalisiert werden z. B. mit Hilfe eines Buttons in der Bedienoberfläche eines an das Aufnahmegerät angeschlossenen PCs.

In einer grundlegenden Variante besteht das Verfahren zur Aufnahme abgerollter Fingerabdrücke 11 aus dem Erstellen einer oder mehrerer Aufnahmen des abgerollten Fingers 5 und deren Ablegen in einem Speicher sowie dem Verarbeiten der im Speicher abgelegten Aufnahmen und dem simultanen Anzeigen von Nutzeranweisungen und Korrekturen fehlerhafter Nutzung anhand der ausgewerteten Fingerabdruckaufnahmen, dem Zusammenfügen der aufgenommenen Einzelaufnahmen des Abrollvorganges zu einer abgerollten Fingerabdruckaufnahme und dem automatischen Auswerten der zuletzt erstellten Aufnahmen dahingehend, ob der Abrollprozess abgeschlossen wurde. Wenn der Prozess nicht abgeschlossen ist, erfolgt ein weiterer Durchlauf dieser Schleife, beginnend mit dem aktualisierten Anzeigen der Nutzerführung. Wenn das Ende des Abrollprozesses erkannt wurde, wird die fertig zusammengefügte Abdruckaufnahme des Fingers 5 an eine nachfolgende Verarbeitungseinheit ausgegeben, die mit dem Aufnahmesystem über eine Schnittstelle verbunden ist. Das Ende des Abrollprozesses kann beispielsweise vom Aufnahmegerät dadurch erkannt werden, dass eine bestimmte Zeitdauer seit dem Start des Abrollvorganges vergangen ist, oder dadurch, dass der Finger 5 bei der Abrollbewegung eine bestimmte Abrollstrecke überschritten hat. Auch ein Abheben des Fingers 5 von der Auflagefläche 20 oder eine Umkehr der Rollbewegungsrichtung kann als Ende des Abrollvorganges erkannt werden.

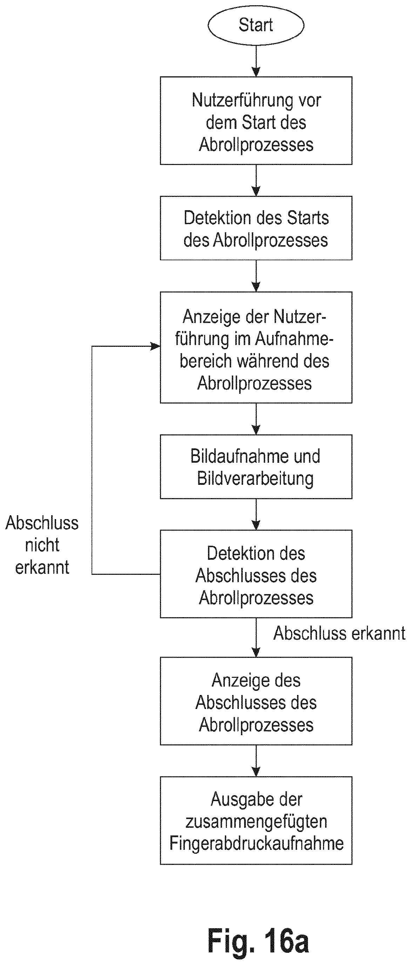

Die in diesem Ablauf enthaltenen Schritte, Erstellen einer oder mehrerer Aufnahmen des abgerollten Fingers 5 und deren Ablegen in einem Speicher sowie das Verarbeiten der im Speicher abgelegten Aufnahmen und das Zusammenfügen der aufgenommenen Einzelaufnahmen des Abrollvorganges zu einer abgerollten Fingerabdruckaufnahme, können, wie in Fig. 15 dargestellt, auch zusammengefasst als Bildaufnahme und Verarbeitung bezeichnet werden. Diese Bezeichnung wird in Fig. 16a bis Fig. 21 zur Vereinfachung der Beschreibung verwendet und meint die darunter zusammengefassten Schritte.

In einer alternativen Ausführungsvariante kann das Ende des Abrollprozesses auch manuell signalisiert werden z. B. mit Hilfe eines Hinweisfensters auf einem PC, der an das Aufnahmesystem angeschlossen ist.

In einer alternativen Ausführungsvariante kann statt des fortlaufenden Zusammenfügens der Einzelaufnahmen zu einer Rollabdruckaufnahme des abgerollten Fingers 5 auch das gesamte Zusammenfügen des gerollten Fingerabdrucks 11 nach dem Ende des Abrollprozesses erfolgen.

Das Zusammenfügen der aufgenommenen Einzelaufnahmen des Abrollvorganges zu einer abgerollten Fingerabdruckaufnahme, die am Ende des Zusammenfügevorganges das Ergebnisbild 13 darstellt, kann durch eine Bildverarbeitungseinheit erfolgen, welche nach dem in der vorgenannten US 4 933 976 A vorgestellten Prinzip zum Zusammensetzen von Rollabdruckbildern aus Einzelfingerabdruckbildern arbeitet. Das Abrollbild bzw. die Abrollaufnahme wird dabei erstellt, indem eine der fortlaufend erstellten Aufnahmen als Anfang der Abrollaufnahme genutzt wird und diese in Abrollrichtung sukzessive (fortlaufend) um Fingerabdruckbereiche aus den nachfolgenden Aufnahmen ergänzt wird. Dabei wird jeweils zwischen den Fingerabdruckbereichen aus dem aktuellen Stand der Abrollaufnahme und der zuletzt erstellten Einzelaufnahme ein Überlappungsbereich gebildet, in welchem für jede Bildzeile y die x-Koordinate ermittelt wird, an der die Einzelaufnahme in Rollrichtung angefügt wird.

In einer alternativen Ausführungsvariante kann das Zusammenfügen auch dadurch erfolgen, dass in die Abrollaufnahme jeweils nur Fingerabdruckbereiche eingefügt werden, die in einander überlappenden Bereichen in mehreren Einzelaufnahmen des Fingerabrollvorgangs enthalten sind und eine geringe Varianz über die mehreren Einzelaufnahmen hinweg aufweisen. Vorzugsweise handelt es sich bei den mehreren Einzelaufnahmen des Fingerabrollvorganges um zeitlich aufeinanderfolgende Aufnahmen. Es werden also gewissermaßen jeweils redundante Bildinhalte von der gleichen Bildposition aus mehreren Bildern miteinander verrechnet. Dadurch können Bildinformationen aus Bildern mit Störungen, wie Artefakten auf Grund der Fingerbewegung, im Abrollbild und somit im Ergebnisbild 13 unterdrückt werden. Weiterhin kann für das Ergebnisbild 13 das in den Einzelbildern enthaltene Rauschen z. B. durch Mittelung reduziert werden.

In einer alternativen Ausführungsvariante kann das Zusammenfügen auch dadurch erfolgen, dass in die Abrollaufnahme pro Position jeweils nur aus einer Einzelaufnahme nach bestimmten Kriterien der Bildinhalt eingefügt wird. Zu diesen Kriterien kann unter anderem gehören, dass es sich in dem Einzelbild an der jeweiligen Bildposition um einen Fingerabdruckbereich handelt. Ein weiteres Kriterium kann lauten: wenn in mehreren Einzelaufnahmen an der gleichen Position ein Fingerabdruckbereich erfasst wurde, kann für diese Position der Inhalt der Aufnahme ausgewählt werden, für die ein Qualitätskriterium an der betreffenden Position, verglichen mit den anderen Aufnahmen, die beste Ausprägung hat. Ein solches Qualitätskriterium kann sein, dass der Inhalt der an dieser Position am wenigsten unscharfen Aufnahme ausgewählt wird. Bezogen auf Fingerabdrücke 11 kann als Aufnahme mit der geringsten Unschärfe die Aufnahme mit der größten Gradientenstärke an den Fingerabdrucklinien ausgewählt werden. Ein anderes Qualitätskriterium kann sein, dass der Inhalt derjenigen Aufnahme ausgewählt wird, die an der verglichenen Position das geringste Maß an Bildstörungen, wie Sättigung des Sensors oder durch zu viel Fingerauflagedruck nicht einzeln identifizierbare Fingerlinien, aufweist. Weitere Qualitätskriterien, insbesondere bei einem Vergleich der Aufnahmen als Grauwertbilder, können unter anderem ein hoher Kontrast zwischen den Linien und Tälern im Fingerabdruckbereich, ein hoher Grauwertabstand zwischen den Linien und Tälern, eine große Anzahl besetzter Grauwerte im Histogramm des Bildbereichs oder eine geringe Anzahl gesättigter Grauwerte sein.

In einer weiteren Ausführungsvariante kann das Zusammenfügen auch dadurch erfolgen, dass Merkmale in den Einzelaufnahmen detektiert werden und gleiche Merkmale in unterschiedlichen Aufnahmen genutzt werden, um die Aufnahmen in ihrem Überlappungsbereich zusammenzufügen. Solche Merkmale können unter anderem anatomische Merkmale des Fingerabdruckes 11, wie Minutien oder Schweißporen, sein. Durch Veränderung der Form des Fingers 5 beim Abrollen können die gleichen Fingerabdruckbereiche in unterschiedlichen Aufnahmen leicht verzerrt, verschoben oder verdreht sein. Daher ist die Orientierung an anatomischen Merkmalen hilfreich, um eine geeignete Zusammenfügelinie für Fingerabdruckbereiche aus unterschiedlichen Einzelbildern zu ermitteln oder Einzelbilder zuvor zu transformieren, z. B. gegeneinander zu verschieben, zu verdrehen oder zu verzerren, um entsprechende Bewegungen und Deformationen des Fingers 5 bei der Aufnahme zu kompensieren und die anatomischen Merkmale aus unterschiedlichen Bildern im Überlappungsbereich zur Deckung zu bringen.

Eine weitere Ausführungsvariante kann sein, dass schon aufgenommene und in das Abrollbild übernommene Bildbereiche aus den Einzelaufnahmen im Abrollbild wieder ersetzt werden, wenn während des weiteren Abrollvorganges von der gleichen Position im Bild oder der gleichen Stelle des Fingers 5 eine qualitativ bessere Aufnahme entsteht. Um zu entscheiden, ob es sich um eine qualitativ bessere Aufnahme des betreffenden Bereichs handelt, können unter anderem die oben genannten Qualitätskriterien herangezogen werden, wie ein hoher Kontrast, ein hoher Grauwertabstand zwischen Fingerabdrucklinien und Tälern oder eine große Gradientenstärke als Maß für eine geringe Unschärfe der Aufnahme.

Die während des Abrollprozesses angezeigte Nutzerführung erfolgt vorzugsweise grafisch und soll es für den Nutzer so einfach wie möglich machen, den Abrollprozess optimal und fehlerfrei durchzuführen. Die Nutzerführung kann anhand eines zeitlich fest vorgegebenen Ablaufs dem Nutzer vorgeben, was zum jeweiligen Zeitpunkt zu tun ist, z. B. in welche Richtung und mit welcher Geschwindigkeit der Finger 5 gerollt werden soll, durch fortlaufendes Anzeigen einer vorgegebenen Fingerposition. Die Nutzerführung kann in einer alternativen Ausführungsvariante auch durch Auswerten der zuletzt erstellten Sensoraufnahmen auch auf das Abrollverhalten der Person reagieren und z. B. die aktuell erkannte Fingerposition und den Fortschritt des Abrollvorgangs anzeigen.

Zum Erstellen der Aufnahmen des Fingerabdruckes 11 sind unterschiedliche Verfahren geeignet, dazu zählen unter anderem das Erstellen von Aufnahmen mit optischen, kapazitiven Sensoren oder akustischen Sensoren (wie Ultraschallsensoren), wobei direkt oder nach einer Umrechnung der aufgenommenen Daten ein Bild des aufgenommenen Fingerabdruckes 11 entsteht.

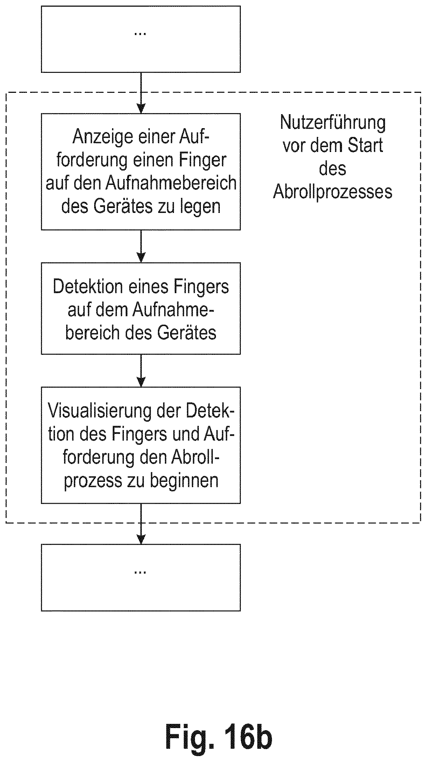

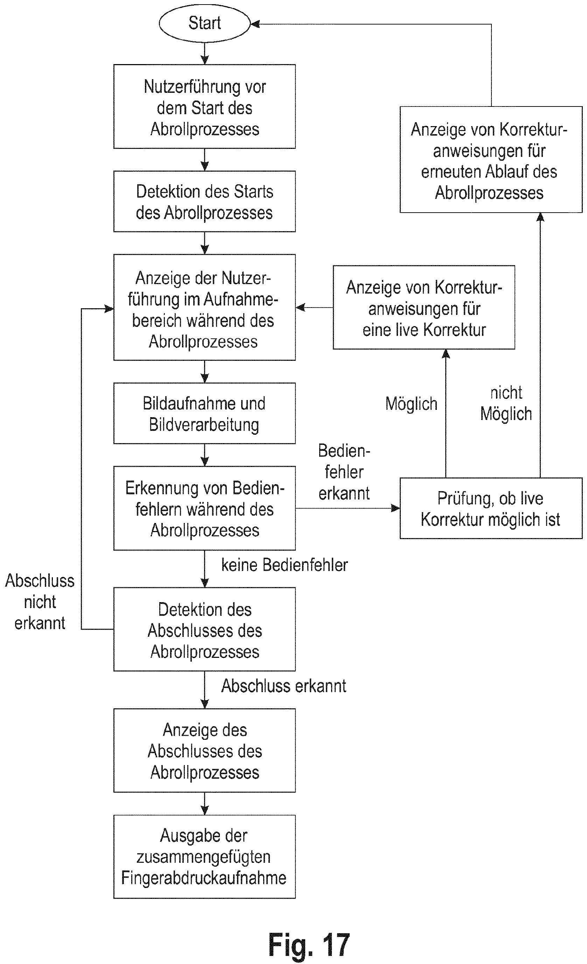

Fig. 16a zeigt den grundlegenden Ablauf aus Fig. 15, erweitert um eine interaktive Nutzerführung für den Auflagevorgang des Fingers 5 vor dem Start des eigentlichen Abrollprozesses. Diese in Fig. 16a dargestellte Nutzerführung vor dem Start des Abrollprozesses zeigt Fig. 16b im Detail. Darin ist dargestellt, dass nach dem Start des Prozesses per Grafik oder Animation im Sensorbereich eine Aufforderung angezeigt wird, einen Finger 5 auf die Auflagefläche 20 zu legen. Anschließend oder gleichzeitig wird eine Bildaufnahme und -verarbeitung zum Erkennen durchgeführt, ob ein Finger 5 aufgelegt wurde. Die Erkennung beinhaltet ein fortlaufendes (sukzessives) Erzeugen von Einzelaufnahmen durch den Sensor und die fortlaufende Auswertung dieser Aufnahmen sowie das Anzeigen der Auswertungsergebnisse der Einzelaufnahmen hinsichtlich des Auflagestatus im Rahmen der Nutzerführung. Auch in Fig. 17 bis Fig. 21 werden unter der Nutzerführung vor dem Start des Abrollprozesses die in Fig. 16b dargestellten Schritte verstanden.

Sobald das Auflegen eines Fingers 5 erkannt wurde, wird, wie Fig. 16a zeigt, im Sensorbereich dieses Erkennen angezeigt und es wird zum Start des Abrollvorganges in eine bestimmte Richtung aufgefordert. Anschließend oder gleichzeitig wird eine Erkennung des Starts des Abrollvorganges durchgeführt, wie für Fig. 15 beschrieben.

Nach dem Ablauf und Ende des Abrollprozesses wird als Erweiterung zu Fig. 15 der Abschluss des Abrollprozesses per Grafik oder Animation im Sensorbereich angezeigt. Dadurch wird der Nutzer eindeutig über den Abschluss des Gesamtprozesses informiert und es wird der Ungewissheit entgegengewirkt, dass der Nutzer unnötig lange das Aufnahmegerät belegt, weil er sich nicht sicher ist, ob die Aufnahme schon abgeschlossen ist, und dadurch der Aufnahmeprozess als deutlich länger wahrgenommen wird. Auch dem zu frühen Abheben des Fingers 5 von der Sensoroberfläche wird entgegengewirkt, da der Nutzer nicht selbst einschätzen muss, nach welcher Zeit die Aufnahme fertiggestellt ist.

In alternativen Ausführungsvarianten kann auch entweder nur die Nutzerführung vor dem Start des Rollvorganges oder nur die Anzeige des Abschlusses des Abrollvorganges durchgeführt werden.

Zum nutzergeführten Erstellen der Aufnahmen des Fingerabdruckes 11, insbesondere wie in Fig. 15 und Fig. 16a gezeigt, sind unterschiedliche Verfahren geeignet. Dazu zählen unter anderem das Erstellen von Aufnahmen mit optischen, kapazitiven Sensoren oder akustischen Sensoren, wobei direkt oder nach einer Umrechnung der aufgenommenen Daten ein Bild des aufgenommenen Fingerabdruckes 11 entsteht.

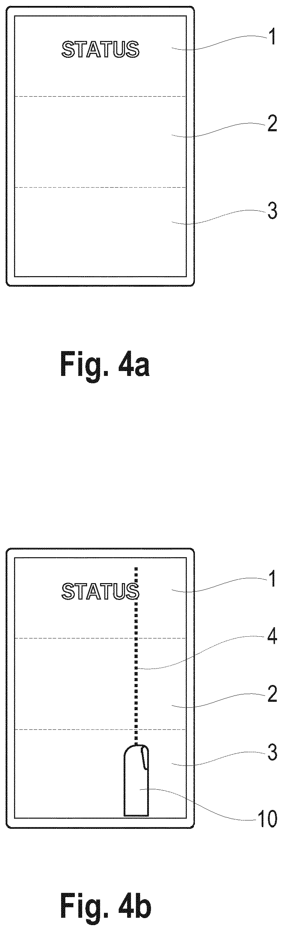

Die nutzergeführte Aufnahme abgerollter Fingerabdrücke 11 wird im Folgenden hinsichtlich der Nutzerführung anhand mehrerer Abbildungen näher erläutert. Eine solche Vorrichtung zur nutzergeführten Aufnahme abgerollter Fingerabdrücke 11 zeigt beispielhaft Fig. 4a, wobei die kombinierte Sensor- und Anzeigeregion des Aufnahmegerätes unterteilt ist in den Statusbereich 1, welcher unter anderem Handlungsanweisungen zum Abrollprozessablauf oder Korrekturanweisungen anzeigt oder für Eingaben erfasst, in den Ergebnisbereich 2, welcher den Fortschritt oder das Ergebnis des Aufnahmeprozesses stilisiert oder in Form aufgenommener Bildinformationen anzeigt, und in den Abrollbereich 3, in welchem Informationen zur Nutzerführung angezeigt und Aufnahmen des Fingers 5 erstellt werden. Diese Bereiche sind frei positionierbar innerhalb der kombinierten Sensor- und Anzeigeregion des Aufnahmegerätes und können in anderen Ausführungsbeispielen auch jeweils eine andere Größe oder Lage innerhalb dieser Region haben. Wie in Fig. 4b dargestellt wird nach dem Start des Prozesses per Grafik oder Animation im Abrollbereich 3 eine Aufforderung angezeigt, einen Finger 5 in einer konkreten Ausrichtung an eine konkrete Stelle der Auflagefläche 20 zu legen. In diesem Fall soll der Finger 5, wie durch die seitliche Fingersilhouette 10 dargestellt, auf seiner rechten Seite liegend im rechten Teil des Abrollbereiches 3 positioniert werden.

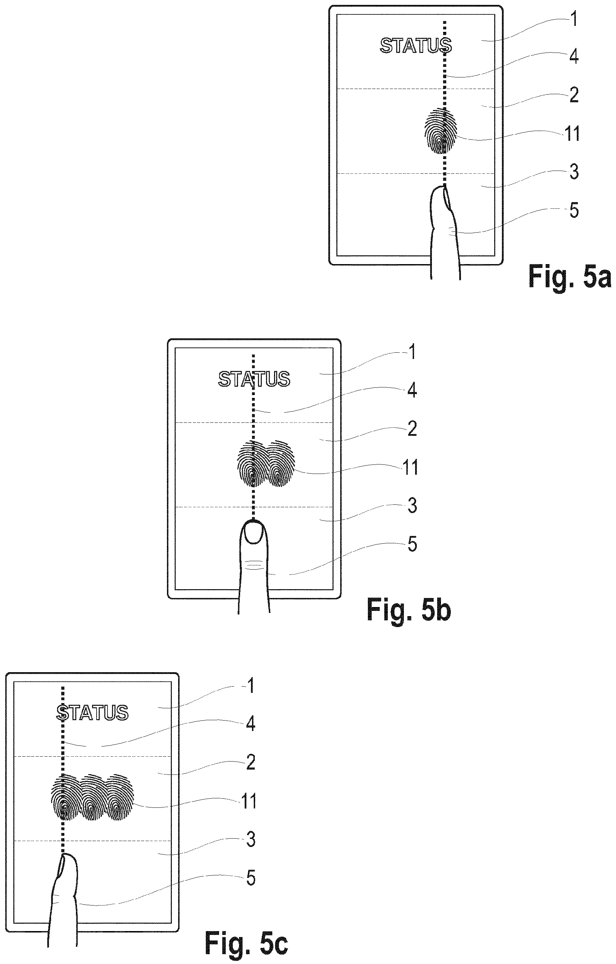

Nach dem Start des Abrollprozesses kann der Fortschritt des Abrollprozesses wie in Fig. 5a, Fig. 5b und Fig. 5c durch real ausgelesene oder abstrahierte Fingerabdrücke 11 angezeigt werden. Dabei zeigt Fig. 5a den Anfang des Abrollprozesses, mit dem abzurollenden Finger 5 auf seiner rechten Seite liegend im rechten Teil des Abrollbereiches 3 und mit dem bisher aufgenommenen kleinen Teil des abgerollten Fingerabdrucks 11. Zur Unterstützung der Abrollbewegung, insbesondere der Geschwindigkeit des Abrollens des Fingers 5, ist in diesem Beispiel eine Positionsanzeige 4 als Handlungsanweisung in Form einer einfachen Linie zur Kennzeichnung der gewünschten Positionsveränderung der Rollachse des Fingers 5 während des Abrollprozesses angezeigt. Der kontinuierliche Fortschritt der Positionsanzeige 4 lateral zum Finger 5 wird aus der Zusammenschau der drei Teilabbildungen Fig. 5a, 5b und 5c ersichtlich.

Dementsprechend zeigt Fig. 5b den Finger 5, auf seiner Unterseite liegend, etwa nach der Hälfte des Abrollvorganges und den schon aus mehreren Bildern zusammengesetzten größeren Teil des abgerollten Fingerabdrucks 11. Fig. 5c zeigt schließlich den nahezu fertig abgerollten Finger 5 auf seiner linken Seite liegend im linken Bereich des Abrollbereiches 3 und den aus den bisherigen Einzelaufnahmen nahezu fertig zusammengesetzten (abgerollten) Fingerabdrucks 11.

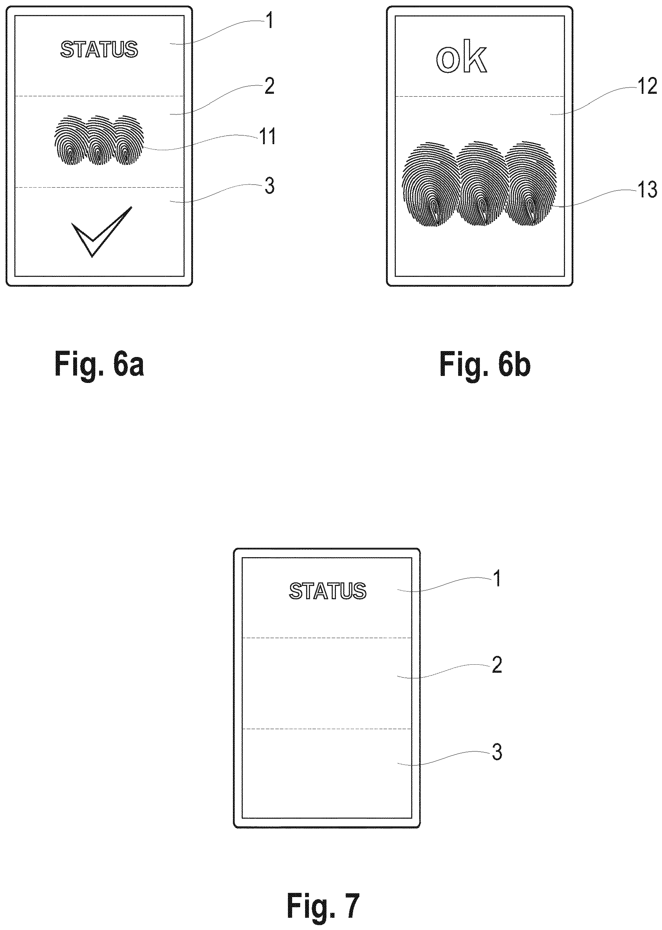

Zur eindeutigen Signalisierung des Abschlusses des Aufnahmeprozesses kann, wie in Fig. 6a dargestellt, z. B. der fertig zusammengefügte (zusammengesetzter, abgerollter) Fingerabdruck 11 im Ergebnisbereich 2 zusammen mit einer Grafik, welche im Abrollbereich 3 den Abschluss des Ausnahmeprozesses anzeigt, dargestellt werden. In einem alternativen Ausführungsbeispiel kann die entsprechende Grafik auch statt im Abrollbereich 3 im Statusbereich 1 dargestellt werden. In einem weiteren Ausführungsbeispiel, welches von Fig. 6b gezeigt wird, kann auch in einem großen Ergebnisbereich 12 ein hochaufgelöstes Ergebnisbild 13 nach dem Abschluss des Abrollprozesses angezeigt werden.

In einem anderen Ausführungsbeispiel für einen nutzergeführten Aufnahmeprozess für einen gerollten Fingerabdruck 11, kann z. B. auch ohne Vorgabe für die Fingerauflageposition vor dem Start des Abrollprozesses begonnen werden, wie in Fig. 7 dargestellt, wobei die Fingerposition vom Nutzer frei gewählt werden kann und dann automatisch als Fingerstartposition für den Abrollvorgang erkannt wird.

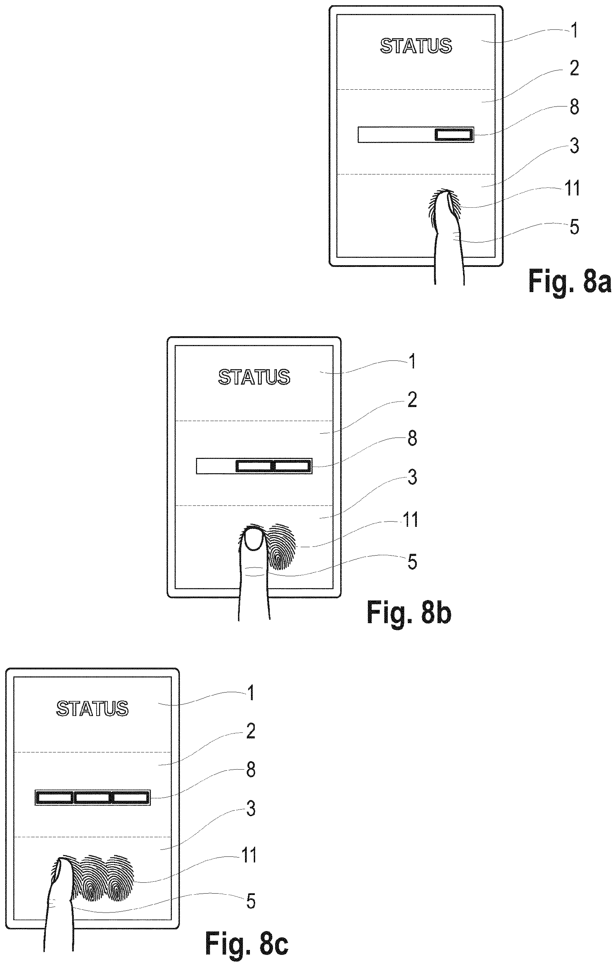

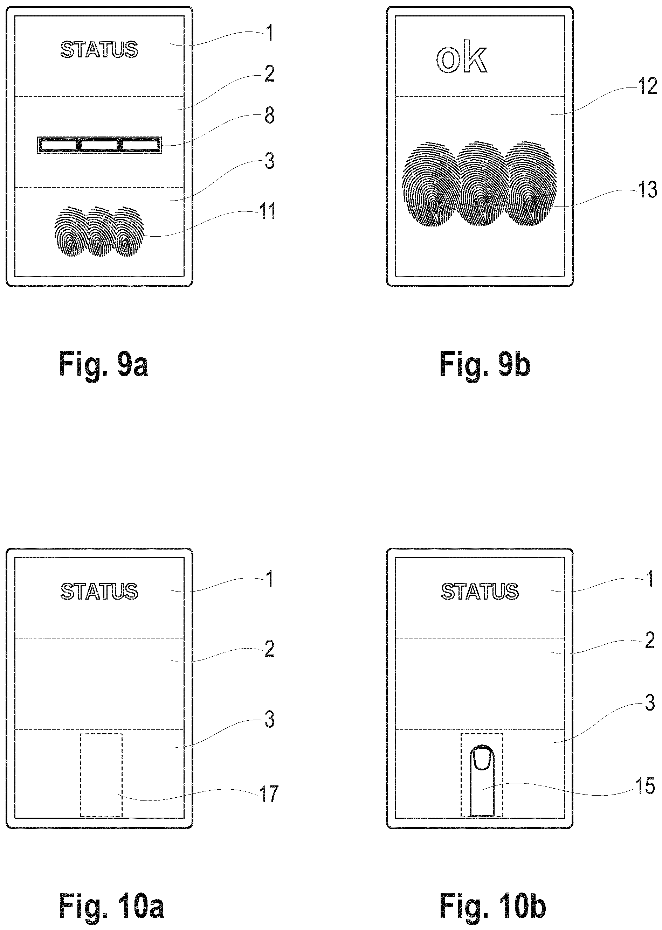

In einem weiteren Ausführungsbeispiel kann im Laufe des Abrollvorganges, wie in Fig. 8a, Fig. 8b und Fig. 8c dargestellt, das tatsächlich schon aufgenommene und zusammengesetzte Fingerabdruckbild fortlaufend direkt unter dem abrollenden Finger 5 angezeigt werden. Dies hat den Vorteil, dass der Vorgang wie beim Aufnehmen gerollter Fingerabdrücke 11 auf Papier wirkt, da der Fingerabdruck 11 direkt unter dem Finger 5 entsteht. Dies kann für Personen, die mit der Fingerabdruckabgabe auf Papier vertraut sind, den Umstieg auf die Nutzung eines elektronischen Aufnahmegerätes und die Anfertigung qualitativ guter gerollter Fingerabdruckaufnahmen erleichtern. Der Fortschritt des Abrollprozesses kann in diesem Ausführungsbeispiel, aber auch bei anderen Ausführungsbeispielen, durch eine Fortschrittsanzeige 8 in direkter örtlicher Nähe zum abrollenden Finger 5 visualisiert werden, z. B. im Ergebnisbereich 2. Der Abschluss des Abrollvorganges kann z. B., wie in Fig. 9a gezeigt, mit einer komplett gefüllten Fortschrittsanzeige 8 im Ergebnisbereich 2 und der Darstellung des vollständig aufgenommenen abgerollten (zusammengesetzter, abgerollter) Fingerabdruckes 11 im Abrollbereich 3 angezeigt werden. Anschließend oder alternativ kann auch, wie in Fig. 9b dargestellt, ein hochaufgelöstes Ergebnisbild 13 in einem großen Ergebnisbereich 12 angezeigt werden.

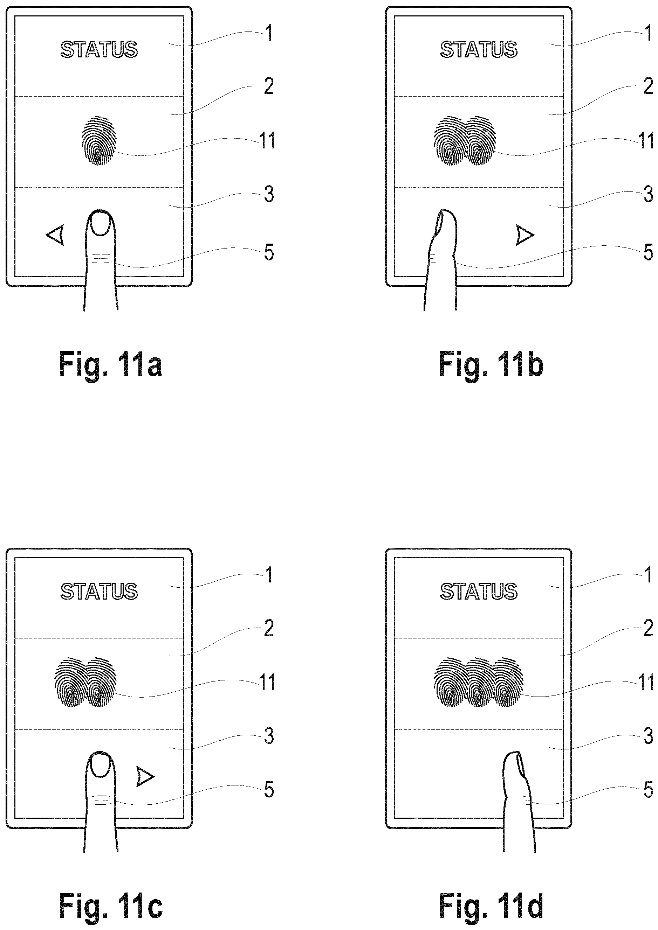

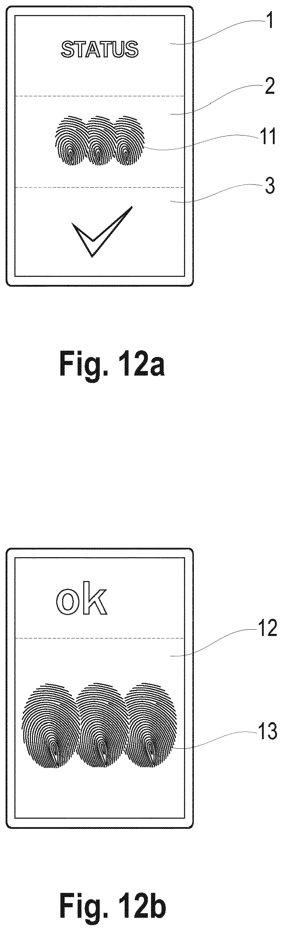

Im nachfolgenden Ausführungsbeispiel wird auf eine alternative Methode zu der bisher dargestellten Methode, den Finger 5 auf einer Fingerseite im Abrollbereich 3 aufzulegen und auf die andere Fingerseite zu rollen, eingegangen. Es handelt sich dabei um das Abrollen des mit der Unterseite in der Mitte des Abrollbereiches 3 aufgelegten Fingers 5 zuerst auf eine Fingerseite und dann ausgehend von dieser Position auf die entgegengesetzte Fingerseite. Dieser Vorgang wird in Fig. 10a bis Fig. 12b veranschaulicht. Dazu wird die Startposition des Fingers 5 in der Mitte des Abrollbereiches 3, wie in Fig. 10a gezeigt, durch eine Positionsfläche 17 oder, wie in Fig. 10b dargestellt, durch die Draufsicht einer Fingersilhouette 15 vorgegeben. Beim Ablauf des Rollprozesses wird zuerst, wie in Fig. 11a gezeigt, das Rollen des Fingers 5 aus der Mittellage in eine Seitenlage vorgegeben und dann, wie in Fig. 11b dargestellt, das Abrollen in die entgegengesetzte Richtung über die Mittellage, wie in Fig. 11c gezeigt, in die entgegensetzte Seitenlage, wie in Fig. 11d veranschaulicht. Der Abschluss des Abrollvorganges kann wie in Fig. 12a und Fig. 12b dargestellt und zuvor bereits beschrieben visualisiert werden.

### Fehler- und Korrekturbehandlung

Fig. 17 zeigt den erweiterten Ablauf aus Fig. 16a, der ergänzt wurde um eine Überprüfung auf Bedienfehler oder Probleme bei der Aufnahme, die fortlaufend innerhalb des Abrollvorganges durchgeführt wird. Diese Überprüfung erfolgt innerhalb des in Fig. 15 beschriebenen Abrollvorgangs zwischen dem Zusammenfügen der Einzelaufnahmen zu einer Abrollaufnahme und der Detektion des Endes des Abrollvorgangs. Dabei werden eine oder mehrere der zuletzt erzeugten Einzelaufnahmen oder der zuletzt zusammengesetzten Fingerabdruckaufnahmen überprüft. Wenn sich darin keine Probleme zeigen oder andeuten, läuft der Abrollprozess wie für Fig. 15 und Fig. 16a beschrieben weiter ab. Wenn sich in den überprüften Aufnahmen Probleme zeigen oder andeuten, wird in einem weiteren Schritt überprüft, ob diesen durch Korrekturmaßnahmen noch während des laufenden Abrollprozesses entgegengewirkt werden kann. Wenn dies möglich ist, werden die entsprechenden Maßnahmen im Rahmen der Nutzerführung zusätzlich zur oder statt der eigentlichen Nutzerführung live während des laufenden Abrollprozesses angezeigt. Ist keine solche "live-Korrektur" möglich, werden Hinweise auf das detektierte Problem und ggf. Maßnahmen zu dessen Vermeidung angezeigt und der gesamte Aufnahmeprozess wird neu gestartet. In einer alternativen Ausführungsvariante kann dabei auch statt an den Anfang an eine fortgeschrittene Stelle im Gesamtaufnahmeprozess gesprungen werden, z. B. zur Aufforderung, mit dem Abrollvorgang zu starten, wenn der Finger 5 schon an der Startposition auf dem Sensor liegt.

In einer alternativen Ausführungsvariante kann sich die Erkennung und Behandlung von Problemen, die während des Abrollprozesses in den erzeugten Aufnahmen detektiert werden, auch auf entweder nur während des Rollvorganges korrigierbare Probleme oder nur auf Probleme, die einen Neubeginn des Abrollvorgangs erfordern, beschränken.

In einer alternativen Ausführungsvariante kann die Überprüfung auf Bedienfehler und Probleme bei der Bildaufnahme auch vor dem Zusammensetzen der bisher aufgenommenen Aufnahmen zu einer Rollaufnahme oder sogar vor der eigentlichen Erzeugung der Aufnahme im aktuellen Durchlauf der Aufnahmeschleife des Abrollvorgangs erfolgen. Dann stehen allerdings zur oben genannten Problemerkennung nur entsprechend ältere Aufnahmen zur Verfügung.

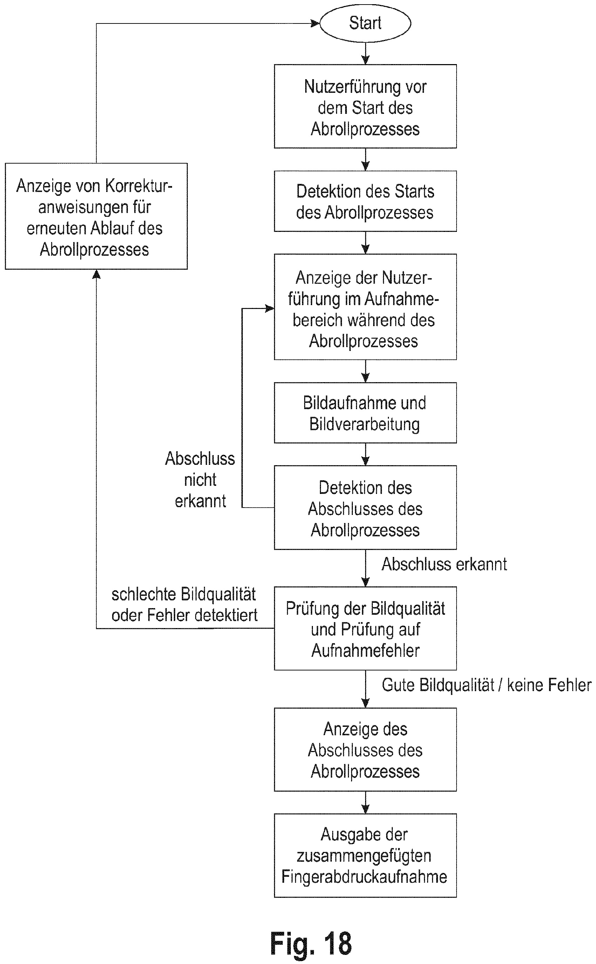

Fig. 18 zeigt den erweiterten Ablauf aus Fig. 16a, der ergänzt wurde um eine Überprüfung der fertig zusammengesetzten Abrollaufnahmen und ggf. dazu verwendeter Einzelaufnahmen nach Abschluss des Abrollprozesses. Werden dabei eine gute Aufnahmequalität und keine Aufnahmeprobleme festgestellt, läuft der Prozess, wie in Fig. 15 oder Fig. 16a beschrieben, weiter und wird erfolgreich abgeschlossen. Wenn aber bei der oben genannten Überprüfung eine schlechte Aufnahmequalität oder Aufnahmeprobleme detektiert werden, werden Hinweise auf das detektierte Problem und ggf. Maßnahmen zu dessen Vermeidung angezeigt und der gesamte Aufnahmeprozess wird neu gestartet.

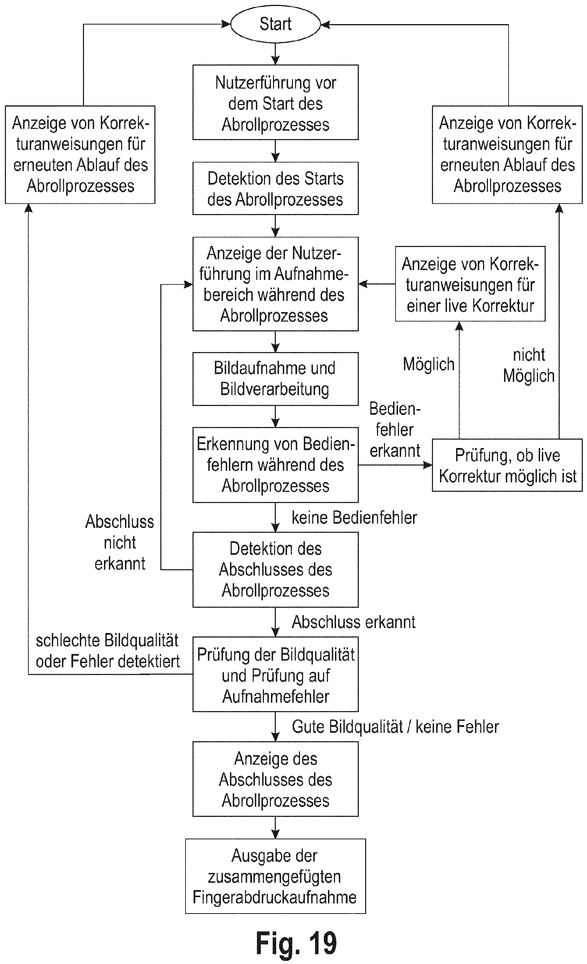

Fig. 19 zeigt eine Kombination der Abläufe aus Fig. 17 und Fig. 18. Dabei werden zum einen der zu Fig. 15 beschriebene grundlegende Ablauf zur Aufnahme von gerollten Fingerabdrücken 11 mit einer Vorrichtung dargestellt, die im Sensorbereich eine interaktive Nutzerführung zur Durchführung des Rollprozesses anzeigt. Weiterhin enthält die Fig. 19 die zu Fig. 16a beschriebene Erweiterung um eine interaktive Nutzerführung für den Auflagevorgang des Fingers 5 vor dem Start des eigentlichen Rollprozesses sowie die Erweiterung, dass nach dem Ablauf und Ende des Rollprozesses der Abschluss des Rollprozesses per Grafik oder Animation im Sensorbereich angezeigt wird. Außerdem zeigt Fig. 19 analog zu Fig. 17 und Fig. 18 sowohl die Detektion und Behandlung von Problemen während des Abrollprozesses als auch die Aufnahmequalitätsbewertung und Aufnahmeproblemerkennung nach dem Abschluss des Rollprozesses und deren Behandlung.

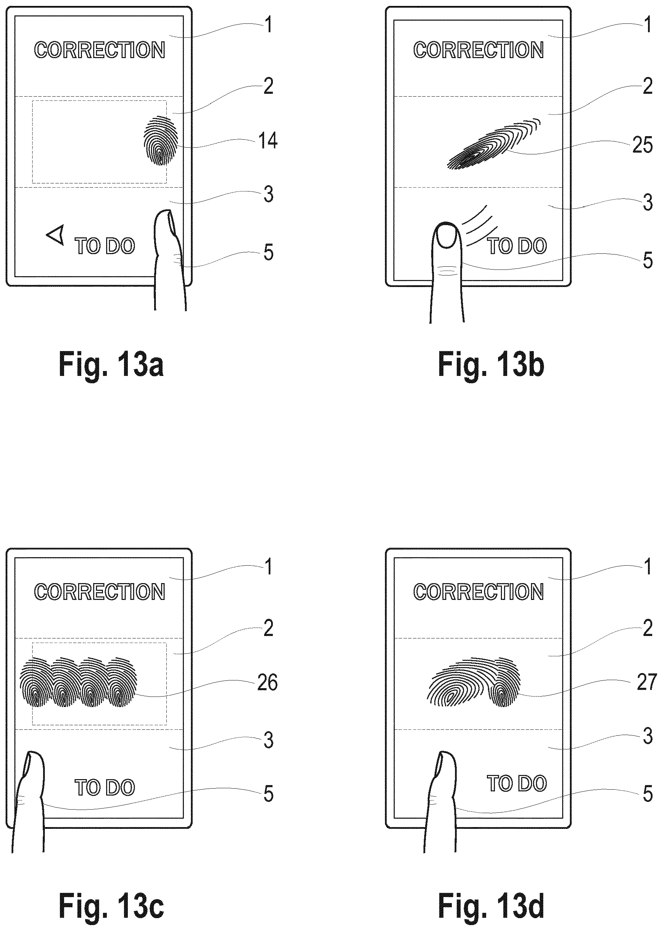

Eine typische Fehlerbehandlung für eine falsche Auflage zu Beginn des Rollvorgangs wird in Fig. 13a gezeigt. Hier ist der Finger 5 zu weit rechts an der Kante aufgelegt. Der Nutzer wird durch die Anweisungen im Statusbereich 1 und / oder Abrollbereich 3 darauf hingewiesen, was zu ändern ist. In diesem Ausführungsbeispiel muss der Finger 5 weiter links aufgelegt werden, um das Abrollen korrekt starten zu können. Die Anzeige im Ergebnisbereich 2 zeigt eine schematische oder originale Darstellung des Fingerabdruckes 11 und dessen fehlerhafte Lage, hier bezeichnet als "Rand"-Fehler 14.

Fig. 13b zeigt das Verrutschen eines Fingers 5 im Ergebnisbereich 2 während des Abrollens im Abrollbereich 3, hier bezeichnet als "Verrutscht"-Fehler 25, und das Anzeigen der nötigen Korrektur oder die Aufforderung zum Neubeginn des Abrollvorgangs in Statusbereich 1 und Abrollbereich 3.

Fig. 13c zeigt das Erkennen eines zu weit gerollten Fingers im Ergebnisbereich 2 bis über die maximal zulässige Breite des Aufnahmebereichs für das Rollen hinaus, hier bezeichnet als "zu weit"-Fehler 26, und die damit verbundene Aufforderung zu Korrektur im Statusbereich 1 und/oder im Abrollbereich 3.

Fig. 13d zeigt die Möglichkeit des Intervenierens während des Abrollens bei zu schnellem Abrollen des Fingers 5, hier bezeichnet als "zu schnell"-Fehler 27. Es wird hier durch Korrekturaufforderungen in Statusbereich 1 und Abrollbereich 3 die Anpassung der Rollgeschwindigkeit vom Nutzer eingefordert. Hierdurch kann der Nutzer die Ausführungsgeschwindigkeit optimal anpassen, um einen erfolgreichen Abrollvorgang zu erhalten.

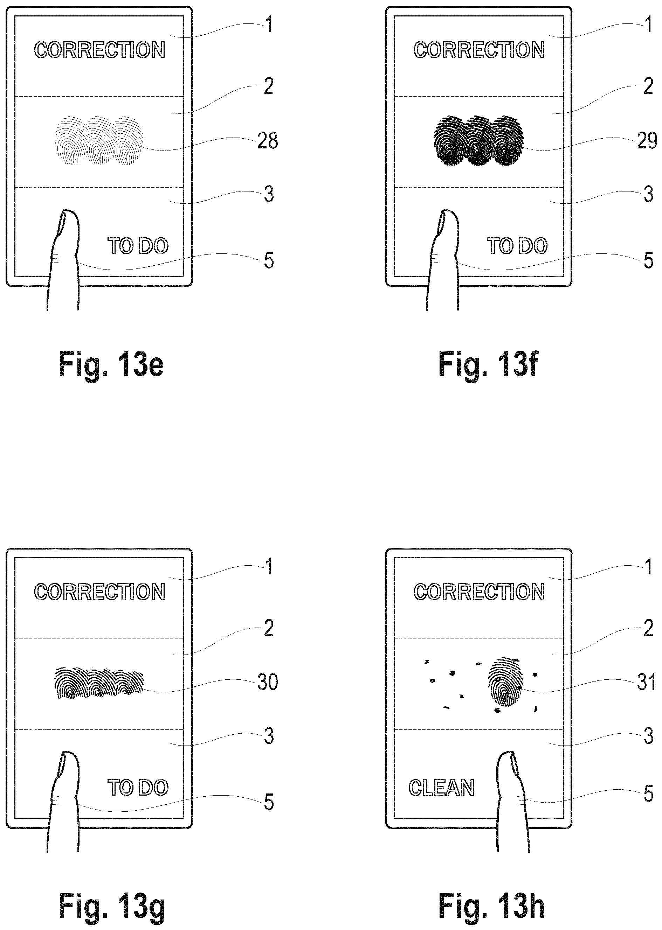

In Fig. 13e wird die Darstellung eines zu trockenen Fingers 5, hier bezeichnet als "zu wenig Druck"-Fehler 28, und in Fig. 13f eines zu feuchten Fingers 5, hier bezeichnet als "zu viel Druck"-Fehler 29, gezeigt. Diese Anzeige des Fingerabdrucks 11 im Ergebnisbereich 2 kann bei diesem Beispiel für eine gute Einschätzung des Ergebnisses führen. Die Notwendigkeit einer Neuaufnahme wird im Statusbereich 1 und Abrollbereich 3 angezeigt.

Ein abgehobener Finger 5 während des Abrollvorgangs wird in Fig. 13g gezeigt, hier bezeichnet als "Unvollständig"-Fehler 30. Das Bild des fehlerhaften Fingerabdrucks 11 im Ergebnisbereich 2 wird für die Verdeutlichung des Effekts dargestellt.

Fig. 13h stellt einen verdreckten Abrollbereich 3 dar, hier bezeichnet als "Verschmutzt"-Fehler 31. Das verschmutzte Bild wird im Ergebnisbereich 2 gezeigt. Das Bild kann nicht für eine Analyse genutzt werden. Die notwendige Aufforderung zur Reinigung wird hier gezeigt.

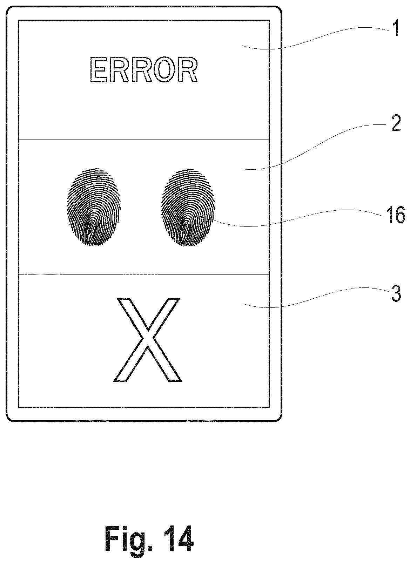

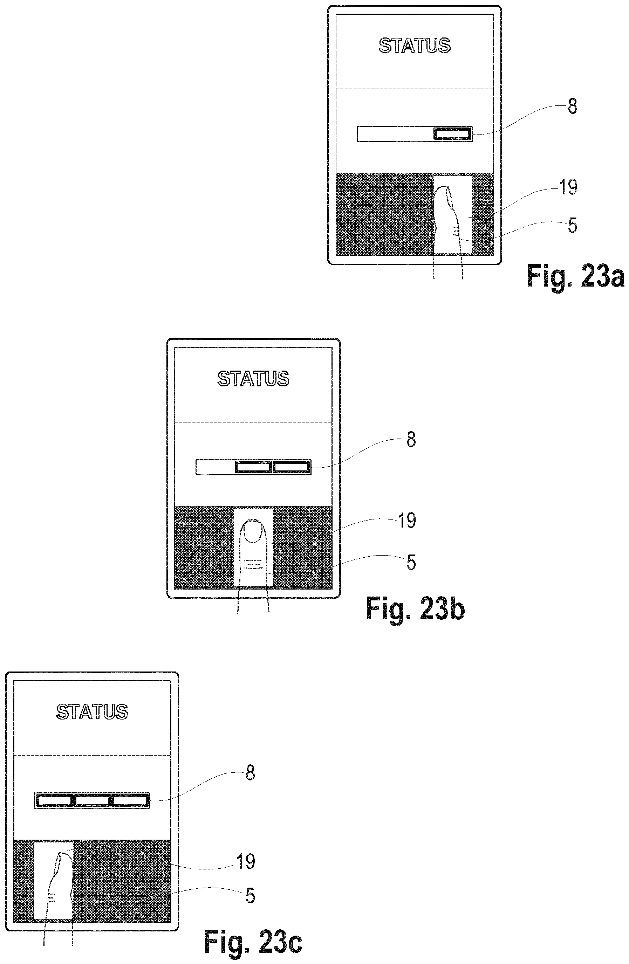

Fig. 14 zeigt ein Beispiel für eine Ergebnisdarstellung bei negativem Ausgang der Fingerabdruckaufnahme, wenn Teilabdrücke aufgrund von Abrollfehlern, Aufnahmefehlern oder anderen Störungen nicht ausgewertet werden konnten. Dabei stellt das Display das unvollständige Ergebnis des Abrollvorganges als fehlerhaftes Ergebnisbild 16 dar und zeigt interaktiv eine Fehlermeldung z. B. verbal mit dem Wort "Error" und gegebenenfalls zusätzlich symbolisch als Kreuz (im Unterschied zum Häkchen gemäß Fig. 12a) an. Danach würde sich erneut eine Handlungsanweisung zum Beginnen der Abrollbewegung anschließen, indem beispielsweise gemäß Fig. 4b eine Fingersilhouette 10 zusammen mit der Positionslinie 4 eingeblendet und lateral über die Auflagefläche bewegt wird. Anders gestaltete Handlungsaufforderungen gemäß Fig. 13a ff. oder Fig. 23a ff. sind alternativ anwendbar, um die Aufnahme des Abrollvorganges zu wiederholen.

### Erweiterte Beleuchtungsvarianten für optische Sensorsysteme

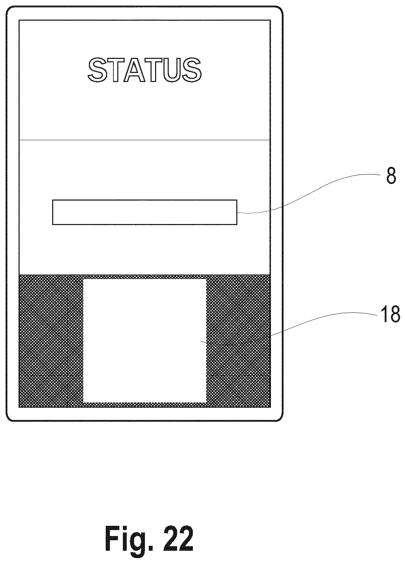

Bei der Verwendung eines optischen Sensorsystems zur Aufnahme von Fingerabdrücken 11 muss der Finger 5 bzw. Fingerabdruckbereiche beleuchtet werden, um davon mittels optischem Sensorsystem ein Bild aufnehmen zu können. Das ggf. vorhandene Umgebungslicht reicht dabei in der Regel nicht aus, um alle Fingerbereiche, insbesondere die mittleren der auf dem Sensor aufliegenden Bereiche, ausreichend beleuchten zu können. Daher ist es vorteilhaft, das innerhalb des Sensorbereichs liegende und auch für die Nutzerführung verwendbare Display dazu zu nutzen, den aufliegenden Finger 5 aus Richtung des Sensorsystems zu beleuchten. Wenn nicht der gesamte Abrollbereich 3 ausgeleuchtet und genutzt werden soll, wie z. B. in Fig. 4a dargestellt, kann dies in einem einfachen Fall durch eine homogene Ausleuchtung des Teils des Abrollbereichs 3 erfolgen, über den der Finger 5 im Laufe des Rollvorgangs abgerollt werden kann, wie die beleuchtete Abrollfläche 18 in Fig. 22 zeigt. Mit der verwendeten strukturierten Beleuchtungseinheit ist es auch möglich, jeweils nur den Bereich des Sensors zu beleuchten, auf dem sich der Finger 5 zum aktuellen Zeitpunkt innerhalb des Aufnahmeprozesses gerade befindet, wie die teilweise beleuchtete Abrollfläche 19 in Fig. 23a, Fig. 23b und Fig. 23c zeigt. So können z. B. jeweils sehr genau die Grenzen des Bereiches visualisiert werden, in dem der Finger 5 aktuell erwartet wird.

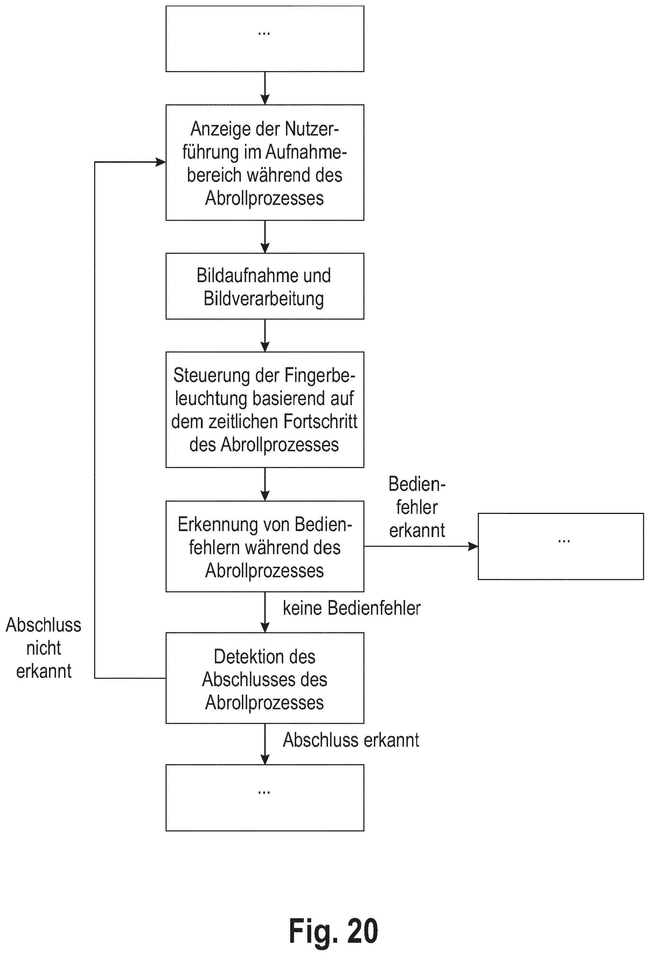

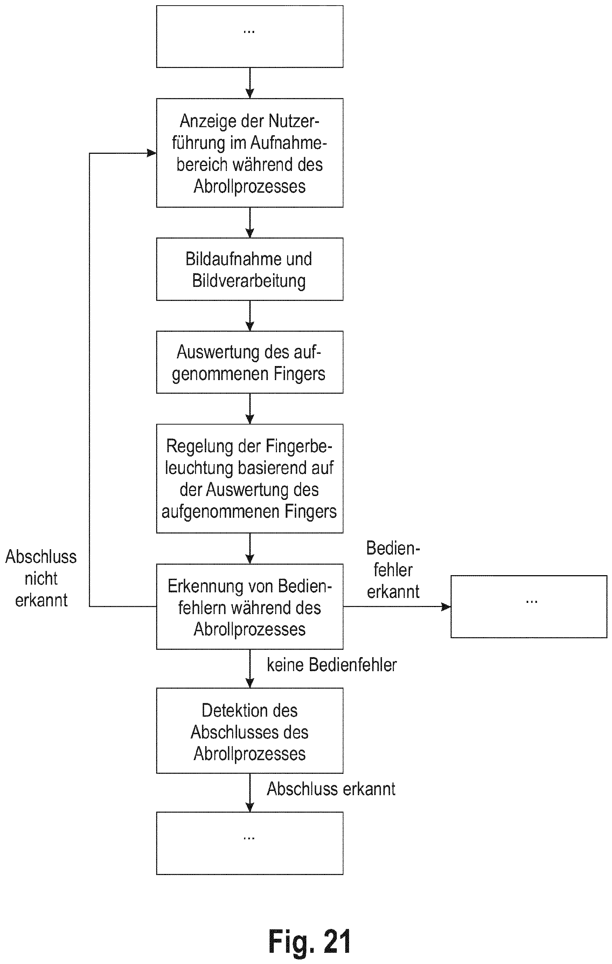

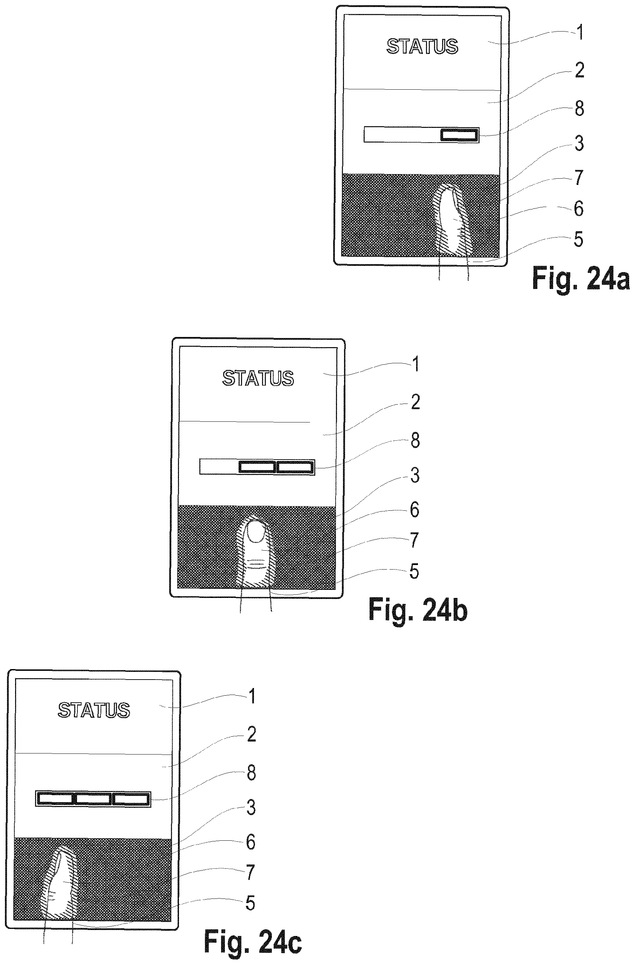

Darüber hinaus kann für eine weitere Verbesserung der Beleuchtungsbedingungen das Display, wie in Fig. 24a, Fig. 24b und Fig. 24c gezeigt, für eine strukturierte Beleuchtung im Bereich des aufgelegten Fingers 5 genutzt werden. Dadurch kann z. B. bei Umgebungslicht, das die Fingerränder stärker als die mittleren Bereiche durchdringt und so zusammen mit der Beleuchtung durch das Display an den Fingerrändern für eine Übersteuerung des Sensors sorgen kann, das vom Display angezeigte Beleuchtungsmuster entsprechend angepasst werden. Das bedeutet, dass das Beleuchtungsmuster so erzeugt werden kann, dass es an den Fingerrändern deutlich dunkler ist als in der Fingermitte, wo kaum Umgebungslicht zur Beleuchtung beiträgt. So kann Sensorübersteuerungen durch Umgebungslicht am Fingerrand oder bei einseitiger Umgebungslichtbeleuchtung entgegengewirkt werden und ein homogen, also gleichmäßig ausgeleuchteter Fingerabdruckbereich für die Bildaufnahme erreicht werden. Die Positionierung sowie die Festlegung von Form und Helligkeitsmuster der vom Display erzeugten Beleuchtung kann, wie in Fig. 20 dargestellt, entsprechend der vom Fingerabdruckaufnahmegerät vorgegebenen Fingerposition erfolgen, wobei dies auf Annahmen zur Fingerposition, Fingerform und Ausleuchtung durch das Umgebungslicht basiert. In einem weiteren Ausführungsbeispiel, worauf in Fig. 21 genauer eingegangen wird, kann die strukturierte Beleuchtung anhand der tatsächlich ermittelten Fingerposition, -form und -ausleuchtung unter Berücksichtigung des Umgebungslichts eingestellt werden.

Fig. 24a, Fig. 24b und Fig. 24c zeigen ein solches Beleuchtungsmuster, das an den Rändern des Fingers 5 durch Helligkeitsabstufung dunkel 7 dunkler ist als durch Helligkeitsabstufung hell 6 in der Mitte des Fingers 5. Das Beleuchtungsmuster kann aus wenigen Beleuchtungsstufen bis hin zu Beleuchtungsverläufen bestehen, wobei die Helligkeitsverläufe eine Vielzahl unterschiedlicher Helligkeitsstufen beinhalten können. In einem weiteren Ausführungsbeispiel kann das Beleuchtungsmuster zusätzlich zu unterschiedlichen Helligkeitsstufen auch eine Vielzahl verschiedener Beleuchtungsfarben beinhalten.

Fig. 20 zeigt die Prozessschritte innerhalb der Abrollprozessaufnahmeschleife aus Fig. 17 und Fig. 19 ergänzt um eine Fingerbeleuchtungssteuerung basierend auf dem zeitlichen Fortschritt des Abrollprozesses. Diese Fingerbeleuchtungssteuerung steuert die Beleuchtung des Gerätes so an, dass nur ein Teil des Sensorbereichs beleuchtet ist und dieser beleuchtete Teil innerhalb des Sensorbereichs eine beliebige Position, Form und ein beliebiges Ausleuchtungsmuster annehmen kann. Diese Möglichkeit einer selektiven Beleuchtung innerhalb des Sensorbereichs wird genutzt, um den Finger 5 nur teilweise zusätzlich zu beleuchten, um z. B. Einflüsse des natürlichen Umgebungslichts bzw. Sonnenlichts zu kompensieren. In Fig. 20 wird der Ablauf des Abrollprozesses vom Gerät fest vorgegeben. Die Fingerbeleuchtungssteuerung wird nach der Anzeige bzw. Aktualisierung der Nutzerführung innerhalb des Rollprozesses und vor der Bildaufnahme aktiv und es wird genau in dem Sensorbereich beleuchtet, in dem basierend auf dem zeitlich festen Ablauf des Abrollprozesses eine zusätzliche Ausleuchtung des Fingers 5 erforderlich sein müsste.

Der in Fig. 20 dargestellte Ablauf mit Fingerbeleuchtungssteuerung ist eine allgemeine Erweiterung des Rollbildaufnahmeprozesses mit optischen Sensoren. Diese Erweiterung kann sowohl für Rollbildaufnahmen mit Fehlerbehandlung in der Aufnahmeschleife, wie in Fig. 17 und Fig. 19, als auch für Rollbildaufnahmen ohne diese Fehlerbehandlung eingesetzt werden. Deutlich wird dies auch dadurch, dass man beim Weglassen der Überprüfung auf Bedienungsfehler innerhalb des in Fig. 20 dargestellten Rollprozesses eine Erweiterung des in Fig. 15 dargestellten grundlegenden Ablaufs zur Aufnahme von gerollten Fingerabdrücken 11 erhält.

In einem weiteren Ausführungsbeispiel kann die Fingerbeleuchtungssteuerung auch an einer anderen Stelle innerhalb der Abrollprozessaufnahmeschleife erfolgen, da zu jedem Zeitpunkt klar ist, an welcher Stelle der zu beleuchtende Finger 5 zu den Aufnahmezeitpunkten erwartet wird. Daher kann der beleuchtete Bereich innerhalb der Sensorfläche zu jedem Zeitpunkt zwischen dem vorangegangenen und dem folgenden Bildaufnahmezeitpunkt an die Stelle gesetzt werden, an der sich zum nächsten Aufnahmezeitpunkt der Finger 5 befinden sollte.

Fig. 21 zeigt die Prozessschritte innerhalb der Abrollprozessaufnahmeschleife aus Fig. 17 oder Fig. 19 ergänzt um eine Fingerauswertung und eine Fingerbeleuchtungsregelung. Die Fingerauswertung ist eine Bildverarbeitungseinheit, welche in zumindest einem der zuletzt vom Sensor aufgenommenen Bilder die Position, Form und Ausleuchtungsverteilung des auf der Auflagefläche 20 liegenden Teils des Fingers 5 auswertet und die Ergebnisse für nachfolgende Schritte bereitstellt. Die Fingerbeleuchtungsregelung kann die Beleuchtung des Gerätes so regeln, dass nur ein Teil des Sensorbereichs beleuchtet ist und dieser Teil hinsichtlich Position, Form und Beleuchtungsmuster beliebig definiert werden kann. Mit der von der Fingerauswertung ermittelten Position, Form und Ausleuchtungsverteilung des die Sensoroberfläche berührenden Teils des Fingers 5 jeweils zum Aufnahmezeitpunkt des zuletzt aufgenommenen Bildes gibt die Fingerbeleuchtungsregelung, basierend auf der Position, Form und Ausleuchtungsverteilung und der aus den vorangegangenen Bildern ermittelten Bewegungstrajektorie des Fingers 5, die Position des beleuchteten Bereich innerhalb der Sensorfläche dort vor, wo der Finger 5 basierend auf dessen Bewegung zum nächsten Bildaufnahmezeitpunkt wahrscheinlich sein wird. Außerdem können die Form des beleuchteten Bereichs innerhalb der Sensorfläche und das Beleuchtungsmuster in diesem Bereich durch die Fingerbeleuchtungsregelung derart angepasst werden, dass zusammen mit dem vorhandenen Umgebungslicht eine gleichmäßigere Ausleuchtung des aufliegenden Fingerbereichs erreicht wird. Dadurch kann auch bei einem Abrollprozess, bei dem nicht das Gerät, sondern der Nutzer die Geschwindigkeit und somit auch die Fingerposition vorgibt, der Finger 5 selektiv beleuchtet werden, um z. B. Umgebungslichteinflüsse zu kompensieren. Die Detektion von Fingerposition, -form und -ausleuchtungsverteilung sowie die Fingerbeleuchtungsregelung erfolgen in dem in Fig. 21 dargestellten Ausführungsbeispiel nach der Bildaufnahme und dem Anfügen des aktuellen Bildes an das Abrollbild. Sie können in anderen Ausführungsbeispielen auch an anderen Stellen innerhalb der Abrollprozessaufnahmeschleife durchgeführt werden.

Die an der Fingerposition ausgerichtete selektive Beleuchtung im Sensorbereich, mittels Fingerauswertung und Fingerbeleuchtungsregelung, kann genutzt werden, um bei einem Abrollvorgang, bei welchem dem Nutzer die Rollbewegung nicht vorgegeben wird, sondern er diese Bewegung z. B. hinsichtlich Abrollrichtung und -geschwindigkeit frei ausführen kann, die Position, Form und Helligkeitsverteilung der Beleuchtung exakt auf den aufgelegten Finger 5 zum jeweiligen Zeitpunkt anzupassen. Außerdem kann die an der Fingerposition ausgerichtete selektive Beleuchtung im Sensorbereich, mittels Fingerauswertung und Fingerbeleuchtungsregelung, genutzt werden, um bei einer vom Gerät vorgegebenen Fingerposition die Beleuchtungsposition exakter auf den Finger 5 auszurichten, als es bei einer fest vorgegebenen Bewegung des beleuchteten Sensorbereichs passieren würde. Denn es ist davon auszugehen, dass es immer eine gewisse Abweichung zwischen vom Gerät vorgegebener und vom Nutzer umgesetzter Fingerposition gibt.

Analog zu Fig. 20 ist auch der in Fig. 21 dargestellte Ablauf mit Fingerauswertung und Fingerbeleuchtungsregelung eine allgemeine Erweiterung des Rollbildaufnahmeprozesses mit optischen Sensoren. Diese Erweiterung kann sowohl für Rollbildaufnahmen mit Fehlerbehandlung in der Aufnahmeschleife, wie in Fig. 17 und Fig. 19, als auch für Rollbildaufnahmen ohne diese Fehlerbehandlung eingesetzt werden. Deutlich wird dies wieder dadurch, dass man beim Weglassen der Überprüfung auf Bedienungsfehler innerhalb des in Fig. 21 dargestellten Rollprozesses eine Erweiterung des in Fig. 15 dargestellten grundlegenden Ablaufs zur Aufnahme von gerollten Fingerabdrücken 11 erhält.

### Bezugszeichenliste

- 1: Statusbereich
- 2: Ergebnisbereich
- 3: Abrollbereich
- 4: Positionsanzeige
- 5: Finger
- 6: Helligkeitsabstufung hell
- 7: Helligkeitsabstufung dunkel
- 8: Fortschrittsanzeige
- 9: Rahmen
- 10: seitliche Fingersilhouette
- 11: (zusammengesetzter, abgerollter) Fingerabdruck
- 12: großer Ergebnisbereich
- 13: Ergebnisbild
- 14: "Rand"-Fehler
- 15: Draufsicht einer Fingersilhouette
- 16: fehlerhaftes Ergebnisbild
- 17: Positionsfläche
- 18: beleuchtete Abrollfläche
- 19: teilweise beleuchtete Abrollfläche
- 20: Auflagefläche
- 21: Schutzschicht
- 22: Sensorschicht
- 23: Lichtquelle
- 24: Lichtanteile
- 25: "Verrutscht"-Fehler
- 26: "Zu weit"-Fehler
- 27: "Zu schnell"-Fehler
- 28: "Zu wenig Druck"-Fehler
- 29: "Zu viel Druck"-Fehler
- 30: "Unvollständig"-Fehler
- 31: "Verschmutzt"-Fehler
- 32: weitere Lichtquelle (zur Beleuchtung)

## Patentansprüche

1. Vorrichtung zur Direktaufnahme von Abdrücken eines abgerollten Fingers (5) mit einem Schichtkörper, enthaltend:
- eine Sensorschicht (22), die eine zweidimensionale Matrix, bestehend aus Sensorelementen zur Detektion charakteristischer Hautabdrücke des abgerollten Fingers (5), aufweist, und
- eine Auflagefläche (20) als der Sensorschicht (22) parallel gegenüberliegende Außenfläche des Schichtkörpers, auf der der Finger (5) abrollbar ist,
**dadurch gekennzeichnet, dass**
- eine Lichtquelle (23) vorhanden ist, die einzeln oder in Gruppen ansteuerbare Leuchtelemente aufweist, mit denen Lichtanteile (24) der Lichtquelle (23) durch die Sensorschicht (22) und die Auflagefläche (20) hindurch in unmittelbarer Umgebung des Fingers (5) visuell sichtbare Muster zur Nutzerinformation mit räumlichem und zeitlichem Bezug zum abrollenden Finger (5) erzeugbar sind, wobei die Lichtquelle (23) durch die Leuchtelemente dargestellte Muster in einer Folge von Bildern mit einer Bildwiederholrate von mindestens einem Bild pro Sekunde ändern kann und
- eine elektronische Steuerung vorhanden ist, die mit der Lichtquelle (23) in Verbindung steht und so steuerbar ist, dass durch die ansteuerbaren Leuchtelemente der Lichtquelle (23) in unterschiedlichen Bereichen der Auflagefläche (20) ein zeitlich veränderliches Muster mit einer Bewegung lateral zur Längsausdehnung des Fingers (5) erzeugbar ist.

2. Vorrichtung nach Anspruch 1, **dadurch gekennzeichnet, dass** die Sensorelemente empfindlich gegenüber mindestens einer physikalischen Größe aus der Gruppe: Kapazität, ohmscher Widerstand, Impedanz, akustische Signale, Temperatur und Lichtintensität sind.

3. Vorrichtung nach einem der Ansprüche 1 und 2, **dadurch gekennzeichnet, dass** die Leuchtelemente der Lichtquelle (23) so ansteuerbar sind, dass dargestellte Muster mit einer Bildwiederholrate zwischen 10 und 30 Bildern pro Sekunde änderbar sind.

4. Vorrichtung nach einem der Ansprüche 1 bis 4, **dadurch gekennzeichnet, dass** die Sensorschicht (22) derart ausgebildet ist, dass eine Aufnahmegeschwindigkeit, mit der Aufnahmen des abgerollten Fingers (5) ausgelesen werden, für einen Teilbereich der Auflagefläche (20) höher einstellbar ist als für Aufnahmen über die gesamte Fläche.

5. Vorrichtung nach einem der Ansprüche 1 bis 4, **dadurch gekennzeichnet, dass** die Sensorelemente lichtempfindlich sind, wobei der Abstand zwischen der Sensorschicht (22) und der Auflagefläche (20) kleiner ist als das Fünffache des Mittenabstandes zweier benachbarter Sensorelemente und die Lichtquelle (23) des Schichtkörpers so ausgebildet ist, um zusätzlich zur Darstellung von Mustern zur Nutzerinformation mittels einzeln oder in Gruppen ansteuerbarer Bereiche der Lichtquelle (23) ein Beleuchtungsmuster zur homogenisierten Ausleuchtung des abrollenden Fingers (5) und zur Minimierung des Einflusses von Umgebungslicht bei der Aufnahme abgerollter Fingerabdrücke (11) zu erzeugen.

6. Vorrichtung nach Anspruch 5, **dadurch gekennzeichnet, dass** der Abstand zwischen der Sensorschicht (22) und der Auflagefläche (20) kleiner ist als das Zweifache des Mittenabstandes zweier benachbarter Sensorelemente.

7. Vorrichtung nach Anspruch 5 oder 6, **dadurch gekennzeichnet, dass** die Lichtquelle (23) des Schichtkörpers so ausgebildet ist, um den abrollenden Finger (5) mit Licht eines gewünschten Wellenlängenbereichs zur Bildaufnahme abgerollter Fingerabdrücke (11) zu beleuchten.

8. Vorrichtung nach Anspruch 1, **dadurch gekennzeichnet, dass** die Sensorelemente lichtempfindlich sind und zusätzlich zu der Lichtquelle (23) für die Darstellung von Mustern zur Nutzerinformation eine weitere Lichtquelle (32) zur Beleuchtung des abrollenden Fingers (5) mit Licht eines gewünschten Wellenlängenbereichs vorhanden und so ausgebildet ist, um mittels einzeln oder in Gruppen ansteuerbarer Bereiche der weiteren Lichtquelle (32) ein Beleuchtungsmuster zur homogenisierten Ausleuchtung des abrollenden Fingers (5) und zur Minimierung des Einflusses von Umgebungslicht bei der Aufnahme abgerollter Fingerabdrücke (11) zu erzeugen.

9. Vorrichtung nach einem der Ansprüche 1 bis 8, **dadurch gekennzeichnet, dass** die Lichtquellen (23, 32) als Flüssigkristall-, Leuchtdioden-, Elektrolumineszenz- oder Quantenpunktdisplay ausgebildet sind.

10. Vorrichtung nach einem der Ansprüche 6 bis 9, **dadurch gekennzeichnet, dass** die elektronische Steuerung mit der Sensorschicht (22) verbunden ist und eine Recheneinheit zur Berechnung eines angepassten inhomogenen Beleuchtungsmusters zur Beleuchtung des abrollenden Fingers (5) aufweist sowie zur Ansteuerung von einzeln oder in Gruppen ansteuerbaren Bereichen der einen oder weiteren Lichtquelle (23, 32) in Verbindung steht zur Beleuchtung des abrollenden Fingers (5) mit dem angepassten inhomogenen Beleuchtungsmuster.

11. Verfahren zur Direktaufnahme von Abdrücken eines abgerollten Fingers (5) unter Verwendung einer Vorrichtung mit einem Schichtkörper, enthaltend eine Sensorschicht (22) zur Detektion charakteristischer Hautabdrücke des abgerollten Fingers (5), eine Auflagefläche (20) als der Sensorschicht (22) parallel gegenüberliegende Außenfläche des Schichtkörpers, auf der der Finger (5) abgerollt werden kann, und eine Lichtquelle (23), die einzeln oder in Gruppen ansteuerbare Leuchtelemente aufweist, sodass Lichtanteile (24) der Lichtquelle (23) durch die Auflagefläche (20) hindurch visuell sichtbare Muster zur Nutzerinformation mit räumlichem und zeitlichem Bezug zum abrollenden Finger (5) erzeugen können, mit den folgenden Schritten:
- Positionieren des Fingers (5) eines Nutzers auf der Auflagefläche (20),
- Anzeigen einer Handlungsanweisung als visuell sichtbares Muster zur Nutzerinformation von der unterhalb der Sensorschicht (22) angeordneten Lichtquelle (23) durch die Sensorschicht (22) hindurch in mindestens einem Bereich der Auflagefläche (20) in unmittelbarer Umgebung des Fingers (5) mittels Ansteuerung der einzeln oder in Gruppen ansteuerbaren Leuchtelemente der Lichtquelle (23) mit einer Bildwiederholrate von mindestens einem Bild pro Sekunde ändern kann in einer Form, die eine sich ändernde Handlungsanweisung mit einer Bewegungsrichtung lateral zur Längsausdehnung des Fingers (5) vorgibt, sodass der Nutzer zum Ausführen einer Abrollbewegung des auf der Auflagefläche (20) positionierten Fingers (5) angeregt wird,
- Ausführen einer Abrollbewegung des Fingers (5) des Nutzers auf der Auflagefläche (20) entsprechend der sich mit räumlichem und zeitlichem Bezug zum abrollenden Finger (5) ändernden Handlungsanweisung,
- Auslesen von Sensordaten spätestens ab Beginn und bis zu einem Ende der Abrollbewegung und Speichern von sukzessive aus der Sensorschicht (22) ausgelesenen Sensordaten als an der Auflagefläche (20) örtlich fortschreitend erfasste Fingerabdruckaufnahmen.

12. Verfahren nach Anspruch 11, wobei dem Positionieren des Fingers (5) ein Anzeigen einer Handlungsanweisung zur korrekten Positionierung und Orientierung des Fingers (5) auf der Auflagefläche (20) durch Ansteuerung der einzeln oder in Gruppen ansteuerbaren Leuchtelemente der Lichtquelle (23) vorausgeht.

13. Verfahren nach Anspruch 11 oder 12, wobei das Ergebnis der Abrollbewegung des Fingers (5) auf der Auflagefläche (20) angezeigt wird.

14. Verfahren nach Anspruch 13, wobei das Ergebnis der Abrollbewegung als aktuelle Sensoraufnahme, als zusammengesetzter Fingerabdruck (11) oder als abstrahierter Fingerabdruck (11) dargestellt wird.

15. Verfahren nach einem der Ansprüche 11 bis 14, wobei während des Abrollvorganges eine gewünschte Geschwindigkeit der Abrollbewegung des Fingers (5) durch eine Bildsequenz als Muster zur Nutzerinformation direkt auf der Auflagefläche (20) vorgegeben wird.

16. Verfahren nach einem der Ansprüche 11 bis 15, wobei eine vom Nutzer gewählte Abrollrichtung erkannt und durch angepasste Darstellung einer Animation der Abrollbewegung als Muster zur Nutzerinformation unterstützt wird.

17. Verfahren nach einem der Ansprüche 11 bis 16, wobei eine gezielte Bildverarbeitung zur Erzeugung des charakteristischen Abdruckbildes des abgerollten Fingers (5) aus den sukzessive durch die Sensorschicht (22) erzeugten Aufnahmen erfolgt, bei der mindestens eine der folgenden Routinen zum Einsatz kommt:
- Verwendung redundanter Fingerabdruckinformationen aus überlappenden Bildbereichen der sukzessive erzeugten Aufnahmen zum Reduzieren von Rauschen,
- Auswählen der am wenigsten unscharfen oder anderweitig gestörten Fingerabdruckinformationen aus den sukzessive erzeugten Aufnahmen zur Weiterverarbeitung,
- Übereinanderlegen und passendes Transformieren von Bereichen mit Fingerabdruckinformationen aus den sukzessive erzeugten Aufnahmen anhand von aufgefundenen Übereinstimmungsmerkmalen,
- Anfügen ausschließlich neuer Bereiche von Fingerabdruckinformationen während des Abrollvorganges nach erstmalig erzeugter Aufnahme über alle sukzessive erzeugten Aufnahmen,
- Anfügen neuer Bereiche von Fingerabdruckinformationen während des Abrollvorganges nach erstmalig erzeugter Aufnahme über alle sukzessive erzeugten Aufnahmen und Ersetzen bereits vorhandener Bereiche durch neue Fingerabdruckinformationen der sukzessive erzeugten Aufnahmen, falls letztere qualitativ bessere Aufnahmen des gleichen Bereichs der Fingerabdruckinformationen enthalten.

18. Verfahren nach einem der Ansprüche 11 bis 17, wobei die während des Abrollvorgangs von der Sensorschicht (22) sukzessive erzeugten Aufnahmen auf Abrollfehler analysiert werden und beim Erkennen von Fehlern oder nicht erfüllten Qualitätskriterien Handlungsanweisungen an den Nutzer als visuell sichtbare Muster zur Nutzerinformation direkt auf der Auflagefläche (20) angezeigt werden.

19. Verfahren nach einem der Ansprüche 11 bis 18, wobei eine Lichtquelle (23, 32) zur Beleuchtung des abrollenden Fingers (5) einzeln oder in Gruppen so angesteuert wird, um den abrollenden Finger (5) bei einer optischen Aufnahme durch eine lichtempfindliche Sensorschicht (22) mit einem angepassten inhomogenen Beleuchtungsmuster zur Minimierung des Einflusses von Umgebungslicht und zur Erzeugung einer homogenisierten Ausleuchtung des abrollenden Fingers (5) zu beleuchten.

## Claims

1. A device for directly recording prints of a rolled finger (5), said device comprising a layered body including:
- a sensor layer (22) having a two-dimensional matrix consisting of sensor elements for detecting characteristic skin prints of the rolled finger (5), and
- a contact surface (20) on which the finger (5) can be rolled, the contact surface being disposed as an outer surface of the layered body parallel to and opposite the sensor layer (22),
**characterised in that**
- a light source (23) is present, said light source (23) comprising lighting elements that can be controlled individually or in groups to generate visible patterns, in the immediate vicinity of the finger (5), for user information with spatial and temporal reference to the rolled finger (5) by portions of light (24) of the light source (23) which pass through the sensor layer (22) and the contact surface (20), wherein the light source (23) is capable of changing patterns, displayed by the lighting elements, in a sequence of images at a refresh rate of at least one image per second, and
- an electronic control unit is present which is connected to the light source (23) and can be controlled such that the controllable lighting elements of the light source (23) can generate a temporally variable pattern in different areas of the contact surface (20) by a movement lateral to the longitudinal extension of the rolled finger.

2. The device according to claim 1, **characterised in that** the sensor elements are sensitive to at least one physical quantity selected from the group consisting of: capacitance, ohmic resistance, impedance, acoustic signals, temperature and light intensity.

3. The device according to any one of claims 1 and 2, **characterised in that** the lighting elements of the light source (23) can be controlled such that displayed patterns can be changed at a refresh rate of between 10 and 30 images per second.

4. The device according to any one of claims 1 to 4, **characterised in that** the sensor layer (22) is configured such that a recording speed at which recordings of the rolled finger (5) are read out can be set higher for a partial area of the contact surface (20) than for recordings over the entire contact surface (20).

5. The device according to any one of claims 1 to 4, **characterised in that** the sensor elements are photosensitive, wherein the distance between the sensor layer (22) and the contact surface (20) is less than five times the distance between the centres of two adjacent sensor elements, and the light source (23) of the layered body is configured such that an illumination pattern for homogenised illumination of the rolled finger (5) and for minimising the influence of ambient light during recording of rolled fingerprints (11) can be generated in addition to the display of patterns for user information by means of areas of the light source (23) which are controllable individually or in groups.

6. The device according to claim 5, **characterised in that** the distance between the sensor layer (22) and the contact surface (20) is less than twice the distance between the centres of two adjacent sensor elements.

7. The device according to claim 5 or 6, **characterised in that** the light source (23) of the layered body is configured to illuminate the rolling finger (5) with light of a selected wavelength range for image recording of rolled fingerprints (11).

8. The device according to claim 1, **characterised in that** the sensor elements are photosensitive, and in addition to the light source (23) for displaying patterns for user information, an additional light source (32) illuminating the rolling finger (5) with light of a desired wavelength range is provided and is configured to generate, by means of areas of the additional light source (32) which are controllable individually or in groups, an illumination pattern for homogenised illumination of the rolling finger (5) and for minimising the influence of ambient light during recording of rolled fingerprints (11).

9. The device according to any one of claims 1 to 8, **characterised in that** the light sources (23, 32) are configured as liquid crystal displays, light emitting diode displays, electroluminescent displays or quantum dot displays.

10. The device according to any one of claims 6 to 9, **characterised in that** the electronic control unit is connected to the sensor layer (22) and has a computing unit for calculating an adapted inhomogeneous illumination pattern for illuminating the rolling finger (5) as well as being connected to control areas of the one or additional light source (23, 32) which are controllable individually or in groups, to illuminate the rolling finger (5) with the adapted inhomogeneous illumination pattern.

11. A method for directly recording prints of a rolled finger (5) using a device with a layered body, the device comprising a sensor layer (22) for detecting characteristic skin prints of the rolled finger (5), a contact surface (20) on which the finger (5) can be rolled, the contact surface (20) being disposed as an outer surface of the layered body parallel to and opposite the sensor layer, and a light source (23) comprising lighting elements that can be controlled individually or in groups to generate visible patterns for user information with spatial and temporal reference to the rolled finger (5) by portions of light (24) of the light source (23) passing through the contact surface (20), the method comprising:
- positioning the finger (5) of a user on the contact surface (20);
- displaying a handling instruction as a visible pattern for user information from the light source (23) arranged below the sensor layer (22) through the sensor layer (22) in at least one area of the contact surface (20) in the immediate vicinity of the finger (5) by controlling the light elements of the light source (23), which can be controlled individually or in groups, at a refresh rate of at least one image per second in a form which provides a changing handling instruction with a direction of movement lateral to the longitudinal extension of the finger (5), so that the user is motivated to execute a rolling movement of the finger (5) positioned on the contact surface (20),
- performing a rolling movement of the finger (5) of the user on the contact surface (20) in accordance with the handling instruction changing according to the spatial and temporal reference to the rolled finger (5),
- reading out sensor data at the latest from the beginning and up to an end of the rolling movement and storing sensor data successively read out from the sensor layer (22) as fingerprint images captured in a locally progressive manner at the contact surface (20).

12. The method according to claim 11, wherein the positioning of the finger is preceded by displaying a handling instruction for accurate positioning and orientation of the finger (5) on the contact surface (20) by controlling the lighting elements of the light source (23) which are controllable individually or in groups.

13. The method according to claim 11 or 12, wherein the result of the rolling movement of the finger (5) on the contact surface (20) is displayed.

14. The method according to claim 13, wherein the result of the rolling movement is displayed as a current sensor recording, as a composite fingerprint (11) or as an abstracted fingerprint (11).

15. The method according to any one of claims 11 to 14, wherein a desired speed of the rolling movement of the finger (5) is specified during the rolling process through an image sequence as a pattern for user information directly on the contact surface (20).

16. The method according to any one of claims 11 to 15, wherein a rolling direction selected by the user is detected and is assisted by an adapted display of an animation of the rolling movement as a pattern for user information.

17. The method according to any one of claims 11 to 16, wherein specific image processing is performed to generate a characteristic print image of the rolled finger (5) from the recordings successively generated through the sensor layer (22), using at least one of the following routines:
- using redundant fingerprint information from overlapping image areas of the successively generated recordings to reduce noise,
- selecting the least blurry or otherwise distorted fingerprint information from the successively generated recordings for further processing,
- superimposing and appropriately transforming areas with fingerprint information from the successively generated recordings based on discovered match features,
- adding areas of fingerprint information during the rolling process after a recording generated for the first time via all successively generated recordings,
- adding new areas of fingerprint information during the rolling process after a recording generated for the first time via all successively generated recordings and replacing existing areas with new fingerprint information of the successively generated recordings when the latter include higher-quality recordings of the same area of fingerprint information.

18. The method according to any one of claims 11 to 17, wherein the recordings successively generated by the sensor layer (22) during the rolling process are analysed for rolling errors and the handling instructions are displayed to the user as visible patterns on the contact surface (20) when errors or quality criteria which have not been met are detected.

19. The method according to any one of claims 11 to 18, wherein a light source (23, 32) for illuminating the rolled finger (5) is controlled individually or in groups such that the rolled finger (5), for an optical recording through a photosensitive sensor layer (22), is illuminated with an adapted inhomogeneous illumination pattern to minimise the influence of ambient light and to generate a homogenised illumination of the rolled finger (5).

## Revendications

1. Dispositif d'enregistrement directe d'empreintes d'un doigt roulé (5) avec un corps stratifié comprenant :
- une couche de capteur (22) comprenant une matrice bidimensionnelle constituée d'éléments capteurs pour détecter des empreintes cutanées caractéristiques du doigt roulé (5), et
- une surface de contact (20) en tant que surface extérieure du corps stratifié, qui est parallèle à la couche de capteur (22) et en face de celle-ci et sur laquelle le doigt (5) peut être roulé,
**caractérisé en ce que**
- une source lumineuse (23) est présente, qui comprend des éléments lumineux pouvant être commandés individuellement ou par groupes pour produire des motifs visibles à proximité immédiate du doigt (5) au moyen des composants lumineux (24) de la source lumineuse (23) qui traversent la couche de capteur (22) et la surface de contact (20), ces motifs servant d'information pour l'utilisateur et avec une référence spatiale et temporelle par rapport au doigt roulant (5), la source lumineuse (23) pouvant modifier des motifs représentés par les éléments lumineux dans une séquence d'images à une fréquence de rafraîchissement d'au moins une image par seconde, et
- une commande électronique est présente, qui est reliée à la source lumineuse (23) et peut être commandée de telle sorte qu'un motif variable dans le temps un mouvement latéral à l'étendue longitudinale du doigt (5) peut être produit par les éléments lumineux commandables de la source lumineuse (23) dans différentes régions de la surface de contact (20).

2. Dispositif selon la revendication 1, **caractérisé en ce que** les éléments capteurs sont sensibles à au moins une grandeur physique choisie dans le groupe constitué par: la capacité, la résistance ohmique, l'impédance, les signaux acoustiques, la température et l'intensité lumineuse.

3. Dispositif selon l'une quelconque des revendications 1 et 2, **caractérisé en ce que** les éléments lumineux de la source lumineuse (23) sont contrôlables de telle sorte que des motifs affichés sont modifiables à une fréquence de rafraîchissement comprise entre 10 et 30 images par seconde.

4. Dispositif selon l'une quelconque des revendications 1 à 4, **caractérisé en ce que** la couche de capteur (22) est conçue de telle sorte qu'une vitesse d'enregistrement à laquelle des enregistrements du doigt roulé (5) sont lus peut être réglée de manière à être plus élevée pour une région partielle de la surface de contact (20) que pour des enregistrements sur toute la surface.

5. Dispositif selon l'une quelconque des revendications 1 à 4, **caractérisé en ce que** les éléments capteurs sont photosensibles, la distance entre la couche de capteur (22) et la surface de contact (20) étant inférieure à cinq fois la distance entre les centres de deux éléments capteurs adjacents, et la source lumineuse (23) du corps stratifié étant conçue de telle sorte qu'afin de générer, en plus de l'affichage de motifs pour l'information de l'utilisateur, au moyen de régions de la source lumineuse (23) qui peuvent être commandées individuellement ou par groupes, un motif d'éclairage pour un éclairage homogène du doigt roulant (5) et pour minimiser l'influence de la lumière ambiante pendant l'enregistrement d'empreintes digitales roulées (11).

6. Dispositif selon la revendication 5, **caractérisé en ce que** la distance entre la couche de capteur (22) et la surface de contact (20) est inférieure à deux fois la distance entre les centres de deux éléments capteurs adjacents.

7. Dispositif selon la revendication 5 ou 6, **caractérisé en ce que** la source lumineuse (23) du corps stratifié est adaptée pour éclairer le doigt roulant (5) avec une lumière d'une gamme de longueurs d'onde souhaitée pour enregistrer une image d'empreintes digitales roulées (11).

8. Dispositif selon la revendication 1, **caractérisé en ce que** les éléments capteurs sont photosensibles et qu'en plus de la source lumineuse (23) pour l'affichage de motifs pour l'information de l'utilisateur, une source lumineuse supplémentaire (32) pour l'éclairage du doigt roulant (5) avec de la lumière d'une gamme de longueurs d'onde souhaitée est prévue et conçue afin de générer, au moyen de régions de la source lumineuse supplémentaire (32) qui peuvent être commandées individuellement ou par groupes, un motif d'éclairage pour l'éclairage homogène du doigt roulant (5) et pour minimiser l'influence de la lumière ambiante pendant l'enregistrement d'empreintes digitales roulées (11).

9. Dispositif selon l'une quelconque des revendications 1 à 8, **caractérisé en ce que** les sources lumineuses (23, 32) sont des écrans à cristaux liquides, à diodes électroluminescentes, à électroluminescence ou à points quantiques.

10. Dispositif selon l'une quelconque des revendications 6 à 9, **caractérisé en ce que** le système de commande électronique est relié à la couche de capteur (22) et présente une unité de calcul pour le calcul d'un motif d'éclairage inhomogène adapté pour l'éclairage du doigt roulant (5), et est relié à la ou aux sources lumineuses (23, 32) pour la commande de régions, pouvant être commandées individuellement ou par groupes, pour l'éclairage du doigt roulant (5) avec le motif d'éclairage inhomogène adapté.

11. Procédé pour l'enregistrement direct d'empreintes d'un doigt roulé (5) à l'aide d'un dispositif avec un corps stratifié, contenant une couche de capteur (22) pour la détection d'empreintes cutanées caractéristiques du doigt roulé (5), une surface de contact (20) comme surface extérieure du corps stratifié, parallèlement opposée à la couche de capteur (22), sur laquelle surface de contact (20) le doigt (5) peut être roulé, et une source lumineuse (23) qui présente des éléments lumineux pouvant être commandés individuellement ou par groupes, de sorte que des composants lumineux (24) de la source lumineuse (23) peuvent produire des motifs visibles à travers la surface de contact (20) qui servent d'information pour l'utilisateur avec une référence spatiale et temporelle par rapport au doigt roulant (5), ledit procédé comprenant les étapes suivantes :
- positionnement du doigt (5) d'un utilisateur sur la surface de contact (20),
- affichage d'une instruction d'action en tant que motif visible, qui sert d'information pour l'utilisateur, à partir de la source lumineuse (23) disposée au-dessous de la couche de capteur (22), à travers la couche de capteur (22) dans au moins une région de la surface de contact (20) à proximité immédiate du doigt (5) au moyen de la commande des éléments lumineux de la source lumineuse (23), qui peuvent être commandés individuellement ou par groupes, à une fréquence de rafraîchissement d'au moins une image par seconde, sous une forme qui fournit une instruction d'action changeant avec une direction de mouvement qui est latérale à l'extension longitudinale du doigt (5), de sorte que l'utilisateur est stimulé pour effectuer un mouvement de roulement du doigt (5) positionné sur la surface de contact (20),
- exécution d'un mouvement de roulement du doigt de l'utilisateur (5) sur la surface de contact (20) conformément à l'instruction d'action changeant avec une référence spatiale et temporelle par rapport au doigt roulant (5),
- lecture des données de capteur au plus tard à partir du début et jusqu'à une fin du mouvement de roulement et stockage de données de capteur lues successivement à partir de la couche de capteur (22) en tant qu'images d'empreintes digitales détectées localement progressivement au niveau de la surface de contact (20).

12. Procédé selon la revendication 11, dans lequel le positionnement du doigt (5) est précédé par l'affichage d'une instruction d'action pour le positionnement et l'orientation corrects du doigt (5) sur la surface de contact (20) en commandant les éléments lumineux de la source lumineuse (23) qui peuvent être commandés individuellement ou en groupes.

13. Procédé selon la revendication 11 ou 12, dans lequel le résultat du mouvement de roulement du doigt (5) sur la surface de contact (20) est affiché.

14. Procédé selon la revendication 13, dans lequel le résultat du mouvement de roulement est représenté comme une image de capteur actuelle, une empreinte digitale composite (11), ou une empreinte digitale abstraite (11).

15. Procédé selon l'une quelconque des revendications 11 à 14, dans lequel, au cours du processus de roulement, une vitesse souhaitée du mouvement de roulement du doigt (5) est prédéterminée par une séquence d'images en tant que motif servant d'information pour l'utilisateur directement sur la surface de contact (20).

16. Procédé selon l'une quelconque des revendications 11 à 15, dans lequel une direction de roulement sélectionnée par l'utilisateur est détectée et aidée par un affichage adapté d'une animation du mouvement de roulement en tant que motif pour l'information de l'utilisateur.

17. Procédé selon l'une quelconque des revendications 11 à 16, dans lequel un traitement d'images sélectif est effectué pour générer l'image d'empreinte caractéristique du doigt roulé (5) à partir des images générées successivement par la couche de capteur (22), utilisant au moins l'une des routines suivantes :
- utilisation d'informations redondantes d'empreintes digitales pour réduire le bruit, ces informations provenant de régions d'images qui se chevauchent dans des images générées successivement,
- sélection des informations d'empreintes digitales les moins floues ou autrement perturbées parmi les images générées successivement pour un traitement ultérieur,
- superposition et transformation appropriée de régions contenant des informations d'empreintes digitales à partir des images générées successivement, sur la base de caractéristiques de correspondance trouvées,
- ajout de régions exclusivement nouvelles d'informations d'empreintes digitales pendant le processus de roulement après la première image générée sur toutes les images générées successivement,
- ajout de nouvelles régions d'informations d'empreintes digitales pendant le processus de roulement après la première image générée sur toutes les images générées successivement et remplacement de régions déjà existantes par de nouvelles informations d'empreintes digitales des images générées successivement, si ces dernières contiennent des images qualitativement meilleures de la même région d'informations d'empreintes digitales.

18. Procédé selon l'une quelconque des revendications 11 à 17, dans lequel les images générées successivement par la couche de capteur (22) pendant le processus de roulement sont analysés pour détecter des erreurs de roulement et, lorsque des erreurs ou des critères de qualité non satisfaits sont détectés, des instructions d'action sont affichées à l'utilisateur sous forme de motifs visibles servant d'information pour l'utilisateur directement sur la surface de contact (20).

19. Procédé selon l'une quelconque des revendications 11 à 18, dans lequel une source lumineuse (23, 32) pour éclairer le doigt roulant (5) est commandée individuellement ou en groupes de manière à éclairer le doigt roulant (5) lorsqu'il est capté optiquement par une couche de capteur photosensible (22) avec un motif d'éclairage inhomogène adapté pour minimiser l'influence de la lumière ambiante et pour produire un éclairage homogène du doigt roulant (5).
